(19) **Europäisches Patentamt**
**European Patent Office**
**Office européen des brevets**

(11) **EP 4 381 421 B1**

(12) **EUROPEAN PATENT SPECIFICATION**

(45) Date of publication and mention
of the grant of the patent:
**03.12.2025 Bulletin 2025/49**

(21) Application number: **22757225.2**

(22) Date of filing: **22.07.2022**

(51) International Patent Classification (IPC):
*G06N 3/084* (2023.01)   *G06N 3/088* (2023.01)
*G06N 3/0455* (2023.01)   *G06N 3/0464* (2023.01)

(52) Cooperative Patent Classification (CPC):
**G06N 3/088; G06N 3/0455; G06N 3/0464;**
**G06N 3/084;** G06N 3/048

(86) International application number:
**PCT/EP2022/070592**

(87) International publication number:
**WO 2023/011943 (09.02.2023 Gazette 2023/06)**

(54) **SIMILARITY RETRIEVAL**

ÄHNLICHKEITSABFRAGE

EXTRACTION DE SIMILARITÉ

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **02.08.2021 EP 21189078**

(43) Date of publication of application:
**12.06.2024 Bulletin 2024/24**

(73) Proprietor: **Bayer Aktiengesellschaft**
**51373 Leverkusen (DE)**

(72) Inventors:
- **VOGLER, Steffen**
  **13086 Berlin (DE)**
- **HOEHNE, Johannes**
  **16515 Oranienburg (DE)**
- **LENGA, Matthias**
  **24159 Kiel (DE)**

(74) Representative: **BIP Patents**
**c/o Bayer Intellectual Property GmbH**
**Alfred-Nobel-Straße 50**
**40789 Monheim am Rhein (DE)**

(56) References cited:
- **FANGXIANG FENG ET AL: "Correspondence Autoencoders for Cross-Modal Retrieval", ACM TRANSACTIONS ON MULTIMEDIA COMPUTING COMMUNICATIONS ANDAPPLICATIONS, ASSOCIATION FOR COMPUTING MACHINERY, US, vol. 12, no. 1s, 21 October 2015 (2015-10-21), pages 1 - 22, XP058077001, ISSN: 1551-6857, DOI: 10.1145/2808205**
- **JONAS DIPPEL ET AL: "Towards Fine-grained Visual Representations by Combining Contrastive Learning with Image Reconstruction and Attention-weighted Pooling", ARXIV.ORG, CORNELL UNIVERSITY LIBRARY, 201 OLIN LIBRARY CORNELL UNIVERSITY ITHACA, NY 14853, 9 April 2021 (2021-04-09), XP081936849**
- **AGISILAOS CHARTSIAS ET AL: "Multimodal MR Synthesis via Modality-Invariant Latent Representation", IEEE TRANSACTIONS ON MEDICAL IMAGING, vol. 37, no. 3, 1 March 2018 (2018-03-01), USA, pages 803 - 814, XP055656238, ISSN: 0278-0062, DOI: 10.1109/ TMI.2017.2764326**
- **XI CHENG ET AL: "Deep similarity learning for multimodal medical images", COMPUTER METHODS IN BIOMECHANICS AND BIOMEDICAL ENGINEERING: IMAGING & VISUALIZATION, 6 April 2016 (2016-04-06), GB, pages 1 - 5, XP055414487, ISSN: 2168-1163, DOI: 10.1080/21681163.2015.1135299**

• NGIAM JIQUAN ET AL: "Multimodal Deep Learning", 1 May 2011 (2011-05-01), pages 1 - 8, XP055836369, Retrieved from the Internet <URL:https://icml.cc/2011/papers/399_icmlpaper.pdf> [retrieved on 20210831]

## Description

FIELD

The following disclosure relates to the field of data analysis, in particular medical data analysis, or more particularly relates to systems, apparatuses, and methods for processing in particular medical data stored in different modalities, so-called multi-modal data. In some embodiments, the disclosure relates to similarity retrieval for input data, in particular medical input data.

BACKGROUND

F. Feng *et al.* disclose correspondence autoencoders for cross-modal retrieval (F. Feng et al.: Correspondence Autoencoders for Cross-Modal Retrieval, ACM Trans. Multimedia Comput. Commun. Appl., Vol. 12, No. 1s, Article 26, 2015).

J. Dippel *et al.* disclose combining contrastive learning with image reconstruction and attention-weighted pooling (J. Dippel et al.: Towards Fine-grained Visual Representations by Combining Contrastive Learning with Image Reconstruction and Attention-weighted Pooling, arXiv:2104.04323v1 [cs.CV]).

Modern medicine is characterized by a wealth of data being aggregated about any given patient. Often, this data covers various quantities of interest such as the chemical composition of blood, structural properties of organs and bones captured in images obtained using various imaging techniques, specific test results of varying levels of confidence, etc. The data can assume one or more different modalities that are best suited to a type of quantity being sensed. Such modalities can be text, tables, diagrams, time series, images, 3D-representations, audio and/or others.

Despite the total volume of data available from many patients, data on a single patient are often sparse and spread across a variety of modalities. Because systematic and comprehensive testing is rarely performed, gaps in the available data are almost inevitable for a given patient. It is the doctor's task to use these heterogeneous and incomplete data collections and reports - in the various forms in which they were documented - to assess the patient's current state of health. The integration of all data is a challenge and therefore, in addition to the data that is hardly available anyway, much of this available data is often neglected as not obviously relevant.

There is a desire to automatically generate an overall picture of a patient that is as complete as possible based on the available data across multiple modalities. This could support medical practitioners and lead to a better reproducibility in diagnosis. To date, the success of the analysis of the diverse sources of patient data is dependent on the experience, knowledge, and attention of an individual medical practitioner. This can cause data to be left disregarded, overseen, and badly interpreted. In particular data of different modalities (image, text, time series, diagrams, or others) may be difficult to integrate into a coherent diagnosis, even more so if for every patient only very different pieces of data are present and some pieces are missing.

SUMMARY

The present disclosure addresses the problems mentioned above. The problems are solved by the subject matter of the independent claims of the present disclosure. Preferred embodiments are found in the dependent claims, in this description and in the drawings.

In a first aspect, the present disclosure provides a computer-implemented method, the method comprising:

- providing a machine learning model, the machine learning model comprising:

  • a first input layer,
  • a second input layer,
  • a first output layer,
  • a second output layer, and
  • a third output layer,

- providing training data for training the machine learning model, wherein providing training data comprises:

  • receiving, for each object of a multitude of objects, input data of at least two different modalities, first input data of a first modality and second input data of a second modality,
  • generating first augmented input data from the first input data and second augmented input data from the second input data,
  • generating first masked input data from the first augmented input data and second masked input data from the second augmented input data,

- training the machine learning model to perform a combined reconstruction and discrimination task, the training comprising:

  • inputting the first masked input data into the first input layer,
  • inputting the second masked input data into the second input layer,
  • reconstructing the first augmented input data from the first masked input data via the first output layer,
  • reconstructing the second augmented input data from the second masked input data via the second output layer,
  • generating a joint representation of the first masked input data and the second masked input data via the third output layer, and
  • discriminating joint representations which were generated from input data of the same object from joint contrastive representations which were generated from input data of different objects,

- receiving input data related to a first object,
- inputting the input data related to the first object into the trained machine learning model,
- receiving from the trained machine learning model a first representation of the first object via the third output layer,
- receiving at least one second representation of at least one second object,
- computing a similarity value, the similarity value indicating the similarity between the first representation and the at least one second representation,
- outputting the similarity value,

wherein the first object, the at least one second object and each object of the multitude of objects is a human being, preferably a patient,

wherein the first object is different from the at least one second object, or the first object is identical to the at least one second object, and the first representation is a representation of the first object at a first point in time and the at least one second representation represents the first object at least one second point in time,

wherein the first input data of the first modality comprises one or more images and the second input data of the second modality comprises or is derived from text files and/or audio files.

In a second aspect, the present disclosure provides a computer system, the computer system comprising:

a processor; and

a memory storing an application program configured to perform, when executed by the processor, an operation, the operation comprising:

- receiving input data related to a first object,
- inputting the input data into a trained machine learning model,
- receiving from the trained machine learning model a first representation of the first object,
- receiving at least one second representation of at least one second object,
- computing a similarity value, the similarity value indicating the similarity between the first representation and the at least one second representation,
- outputting the similarity value,

wherein the trained machine learning model was trained in a training process, the training process comprising the following steps:

- providing a machine learning model, the machine learning model comprising:

  • a first input layer,
  • a second input layer,
  • a first output layer,
  • a second output layer, and
  • a third output layer,

- receiving training data for training the machine learning model, wherein providing training data comprises:

  • receiving, for each object of a multitude of objects, input data of at least two different modalities, first input data of a first modality and second input data of a second modality,
  • generating first augmented input data from the first input data and second augmented input data from the second input data,
  • generating first masked input data from the first augmented input data and second masked input data from the second augmented input data,

- training the machine learning model to perform a combined reconstruction and discrimination task, the training comprising:

  • inputting the first masked input data into the first input layer,
  • inputting the second masked input data into the second input layer,
  • reconstructing the first augmented input data from the first masked input data via the first output layer,
  • reconstructing the second augmented input data from the second masked input data via the second output layer,
  • generating a joint representation of the first masked input data and the second masked input data via the third output layer, and
  • discriminating joint representations which were generated from input data of the same object from joint contrastive representations which were generated from input data of different objects,

wherein the first object, the at least one second object and each object of the multitude of objects is a human being, preferably a patient,

wherein the first object is different from the at least one second object, or the first object is identical to the at least one second object, and the first representation is a representation of the first object at a first point in time and the at least one second representation represents the first object at least one second point in time,

wherein the first input data of the first modality comprises one or more images and the second input data of the second modality comprises or is derived from text files and/or audio files.

In a third aspect, the present invention provides a non-transitory computer readable medium having stored thereon software instructions that, when executed by a processor of a computer system, cause the computer system to execute the following steps:

- receiving input data related to a first object,
- inputting the input data into a trained machine learning model,
- receiving from the trained machine learning model a first representation of the first object,
- receiving at least one second representation of at least one second object,
- computing a similarity value, the similarity value indicating the similarity between the first representation and the at least one second representation,
- outputting the similarity value and/or information related to the at least one second object,

wherein the trained machine learning model was trained in a training process, the training process comprising the following steps:

- providing a machine learning model, the machine learning model comprising:

  • a first input layer,
  • a second input layer,
  • a first output layer,
  • a second output layer, and
  • a third output layer,

- receiving training data for training the machine learning model, wherein providing training data comprises:

  • receiving, for each object of a multitude of objects, input data of at least two different modalities, first input data of a first modality and second input data of a second modality,
  • generating first augmented input data from the first input data and second augmented input data from the second input data,
  • generating first masked input data from the first augmented input data and second masked input data from the second augmented input data,

- training the machine learning model to perform a combined reconstruction and discrimination task, the training comprising:

  • inputting the first masked input data into the first input layer,
  • inputting the second masked input data into the second input layer,
  • reconstructing the first augmented input data from the first masked input data via the first output layer,
  • reconstructing the second augmented input data from the second masked input data via the second output layer,
  • generating a joint representation of the first masked input data and the second masked input data via the third output layer, and

- discriminating joint representations which were generated from input data of the same object from joint contrastive representations which were generated from input data of different objects,

wherein the first object, the at least one second object and each object of the multitude of objects is a human being, preferably a patient,

wherein the first object is different from the at least one second object, or the first object is identical to the at least one second object, and the first representation is a representation of the first object at a first point in time and the at least one second representation represents the first object at least one second point in time,

wherein the first input data of the first modality comprises one or more images and the second input data of the second modality comprises or is derived from text files and/or audio files.

DETAILED DESCRIPTION OF THE INVENTION

The subject matter of the present disclosure is described in more detail below, without distinguishing between the different categories of claims (method, computer system, computer readable medium). On the contrary, the following elucidations are intended to apply analogously to all the aspects of the disclosure, irrespective of in which context (method, computer system, computer readable medium) they occur.

If steps are stated in an order in the present description or in the claims, this does not necessarily mean that the disclosure is restricted to the stated order. On the contrary, it is conceivable that the steps can also be executed in a different order or else in parallel to one another, unless one step builds upon another step, this requiring that the building step be executed subsequently (this being, however, clear in the individual case). The stated orders are thus preferred embodiments of the disclosure.

In one aspect, the present disclosure provides means for identifying, for a first object, one or more second object(s), the one or more second object(s) having a pre-defined similarity to the first object.

An "object" according to the present invention can be anything that can be described by one or more features. An object can e.g. be a visible and/or tangible thing, or a living organism or a part thereof. An object can also be a virtual or artificial object (like a construction drawing or a model of a real object) or a virtual or artificial creature (like an avatar).

In a preferred embodiment of the present disclosure, the object is a human being (a person), preferably a patient.

In another preferred embodiment of the present disclosure, the object is an animal.

In another preferred embodiment of the present disclosure, the object is a plant or a plurality of plants (e.g. plants in an agricultural field).

In another preferred embodiment of the present disclosure, the object is a part of the Earth's surface.

In another preferred embodiment of the present disclosure, the object is a machine, such as a car, or a train, or an airplane, or part thereof such as a motor or a power unit or an electronic circuit or a semiconductor topography or a city model or a building or the like.

The object can be characterized by certain features. In case of a human being, such features include age, height, weight, gender, eye color, hair color, skin color, blood group, existing illnesses and/or conditions, pre-existing illnesses and/or conditions, and/or the like. An image showing the body of the human being or a part thereof is an example of a collection of features characterizing the human being.

Features of an object can be described and/or recorded in various ways, or technically expressed, in different modalities.

For example, the outcome of a pregnancy test can be represented by a picture of the test unit with a certain color indicating the test result or it can alternatively be represented by a line of text saying "This person is pregnant". It may also be a circle with a check mark in it at a certain position of a structured form, it may alternatively be a 1 as opposed to a 0 in the memory of a computer, electronic device, server, or the like. All these data comprise the same information but in the form of different representations/modalities.

The features of an object can be used to identify one or more other objects having similar features. This can be done by means of the machine learning model according to the present disclosure.

Such a machine learning model, as described herein, may be understood as a computer implemented data processing architecture. The machine learning model can receive input data and provide output data based on that input data and the machine learning model, in particular the parameters of the machine learning model. The machine learning model can learn a relation between input data and output data through training. In training, parameters of the machine learning model may be adjusted in order to provide a desired output for a given input.

The process of training a machine learning model involves providing a machine learning algorithm (that is the learning algorithm) with training data to learn from. The term machine learning model refers to the model artifact that is created by the training process. The training data must contain the correct answer, which is referred to as the target. The learning algorithm finds patterns in the training data that map input data to the target, and it outputs a trained machine learning model that captures these patterns.

In the training process, training data are inputted into the machine learning model and the machine learning model generates an output. The output is compared with the (known) target. Parameters of the machine learning model are modified in order to reduce the deviations between the output and the (known) target to a (defined) minimum.

In general, a loss function can be used for training to evaluate the machine learning model. For example, a loss function can include a metric of comparison of the output and the target. The loss function may be chosen in such a way that it rewards a wanted relation between output and target and/or penalizes an unwanted relation between an output and a target. Such a relation can be e.g. a similarity, or a dissimilarity, or another relation.

A loss function can be used to calculate a loss value for a given pair of output and target. The aim of the training process can be to modify (adjust) parameters of the machine learning model in order to reduce the loss value to a (defined) minimum.

A loss function may for example quantify the deviation between the output of the machine learning model for a given input and the target. If, for example, the output and the target are numbers, the loss function could be the difference between these numbers, or alternatively the absolute value of the difference. In this case, a high absolute value of the loss function can mean that a parameter of the model needs to undergo a strong change.

In the case of a scalar output, a loss function may be a difference metric such as an absolute value of a difference, a squared difference.

In the case of vector-valued outputs, for example, difference metrics between vectors such as the root mean square error, a cosine distance, a norm of the difference vector such as a Euclidean distance, a Chebyshev distance, an Lp-norm of a difference vector, a weighted norm or any other type of difference metric of two vectors can be chosen. These two vectors may for example be the desired output (target) and the actual output.

In the case of higher dimensional outputs, such as two-dimensional, three-dimensional or higher-dimensional outputs, for example an element-wise difference metric may for example be used. Alternatively or additionally, the output data may be transformed, for example to a one-dimensional vector, before computing a loss value.

The machine learning model is configured to receive input data of different modalities. Usually, there are different input layers for inputting input data of different modalities, e.g. an image input layer for inputting one or more images, a text input layer for inputting one or more texts (including numbers), and/or an audio input layer for inputting one or more audio files.

The machine learning model is configured to receive input data and generate a representation of the object, at least partially on the basis of the input data and model parameters.

If input data of different modalities are inputted into the machine learning model, the machine learning model is configured to generate a joint representation of the input data of the different modalities. If, for example, the set of input data comprises first input data of a first modality (e.g. an image) and second input data of a second modality (e.g. a text), then the machine learning model generates a joint representation of the first input data and the second input data.

A representation generated by the machine learning model is characterized by the fact that input data from different modalities are merged into one another.

The model is taught to generate representations of objects on the basis of input data (and to merge input data of different modalities into one another) in a training procedure described herein.

The representation of an object generated by the machine learning model can be a vector, or a matrix or a tensor or the like. Usually, the representation of an object generated by the machine learning model is of lesser dimension than the dimension of the input data from which the representation is generated. In other words: when generating a representation of an object on the basis of input data related to the object, the machine learning model extracts information from the input data which is suited to represent the object for the purposes described herein. The extraction of information is usually accompanied by a dimensional reduction.

A representation of an object generated by the machine learning model can be compared with a representation of one or more other objects.

The machine learning model of the present disclosure comprises (at least for training purposes) at least two input layers, a first input layer and a second input layer, and at least three output layers, a first output layer, a second output layer and a third output layer.

The input layers are configured to receive input data coming from different modalities, such as from text, images, video, audio and/or others and/or combinations thereof.

In other words: the machine learning model according to the present invention is configured to receive digital data representing the features of an object in the form of different modalities. Such digital data is herein referred to as input data.

Input data can be or comprise text, number(s), image(s), audio, and/or any other representation and/or combinations thereof.

The term "image" as used herein means a data structure that represents a spatial distribution of a physical signal. The spatial distribution may be of any dimension, for example 2D, 3D, 4D or any higher dimension. The spatial distribution may be of any shape, for example forming a grid and thereby defining pixels, the grid being possibly irregular or regular. The physical signal may be any signal, for example proton density, tissue echogenicity, tissue radiolucency, measurements related to the blood flow, information of rotating hydrogen nuclei in a magnetic field, color, level of gray, depth, surface or volume occupancy, such that the image may be a 2D or 3D RGB/grayscale/depth image, or a 3D surface/volume occupancy model. The image may be a synthetic image, such as a designed 3D modeled object, or alternatively a natural image, such as a photography or frame from a video.

In a preferred embodiment of the present disclosure, an image is a 2D or 3D medical image.

A medical image is a visual representation of the human body or a part thereof or of the body of an animal or a part thereof. Medical images can be used e.g. for diagnostic and/or treatment purposes.

Techniques for generating medical images include X-ray radiography, computerized tomography, fluoroscopy, magnetic resonance imaging, ultrasonography, endoscopy, elastography, tactile imaging, thermography, microscopy, positron emission tomography and others.

Examples of medical images include CT (computer tomography) scans, X-ray images, MRI (magnetic resonance imaging) scans, fluorescein angiography images, OCT (optical coherence tomography) scans, histopathological images, ultrasound images and others.

A widely used format for digital medical images is the DICOM format (DICOM: Digital Imaging and Communications in Medicine).

In another preferred embodiment of the present disclosure, an image is a photography of one or more plants or parts thereof. A photography is an image taken by a camera (including RGB cameras, hyperspectral cameras, infrared cameras, and the like), such camera comprising a sensor for imaging an object with the help of electromagnetic radiation. The image can e.g. show one or more plants or parts thereof (e.g. one or more leaves) infected by a certain disease (such as for example a fungal disease) or infested by a pest (such as for example a caterpillar, a nematode, a beetle, a snail or any other organism that can lead to plant damage).

In another preferred embodiment of the present disclosure, an image according to the present invention is an image of a part of the Earth's surface, such as an agricultural field or a forest or a pasture, taken from a satellite or an airplane (manned or unmanned aerial vehicle) or combinations thereof (remote sensing data/imagery).

"Remote sensing" means the acquisition of information about an object or phenomenon without making physical contact with the object and thus is in contrast to on-site observation. The term is applied especially to acquiring information about the Earth. Remote sensing is used in numerous fields, including geography, land surveying and most Earth science disciplines (for example, hydrology, ecology, meteorology, oceanography, glaciology, geology).

In particular, the term "remote sensing" refers to the use of satellite or aircraft-based sensor technologies to detect and classify objects on Earth. It includes the surface and the atmosphere and oceans, based on propagated signals (e.g. electromagnetic radiation). It may be split into "active" remote sensing (when a signal is emitted by a satellite or aircraft to the object and its reflection detected by the sensor) and "passive" remote sensing (when the reflection of sunlight is detected by the sensor).

Details about remote sensing data/imagery can be found in various publications (see e.g. N. Fareed: Intelligent High Resolution Satellite/Aerial Imagery; Advances in Remote Sensing, 2014, 03. 1-9. 10.4236/ars.2014.31001; C. Yang et al.: Using High-Resolution Airborne and Satellite Imagery to Assess Crop Growth and Yield Variability for Precision Agriculture, in Proceedings of the IEEE, vol. 101, no. 3, pp. 582-592, March 2013, doi: 10.1109/JPROC.2012.2196249; P. Basnyat et al.: Agriculture field characterization using aerial photograph and satellite imagery, in IEEE Geoscience and Remote Sensing Letters, vol. 1, no. 1, pp. 7-10, Jan. 2004, doi: 10.1109/LGRS.2003.822313; WO2018/140225; WO2020/132674; WO2019/217152).

An image used as input data is usually available in a digital format. An image which is not present as a digital image file (e.g. a classic photography on color film) can be converted into a digital image file by well-known conversion tools such as by means of an image scanner.

A "text" is a (written) fixed, thematically related sequence of statements. A text can comprise words and/or numbers, the words usually being made up of letters of an alphabet (e.g. the Latin alphabet). The term "text" also includes tables and spreadsheets.

Text input data may for instance comprise information about some aspect of a human's health. To name a few non-limiting examples, this information can pertain to an internal body parameter such as blood type, blood pressure, resting heart rate, heart rate variability, vagus nerve tone, hematocrit, sugar concentration in urine, or a combination thereof. It can describe an external body parameter such as height, weight, age, body mass index, eyesight, or another parameter of the patient's physique. Further exemplary pieces of health information comprised (e.g., contained) in text input data may be medical intervention parameters such as regular medication, occasional medication, or other previous or current medical interventions and/or other information about the patient's previous and current treatments and reported health conditions. Text input data may for example comprise lifestyle information about the life of the patient, such as consumption of alcohol, smoking, and/or exercise and/or the patient's diet. The (text) input data is of course not limited to physically measurable pieces of information and may for example further comprise psychological tests and diagnoses and similar information about the mental health. In another example, text input data may comprise at least parts of at least one previous opinion by a treating medical practitioner on certain aspects of the patient's health. Text input data may in addition or in the alternative comprise (e.g., contain) references and/or descriptions of other sources of medical data such as other text data and/or data of other modalities such as images acquired by a medical imaging technique, graphs created during a test and/or combinations thereof.

In one example, text input data may at least partly represent an EMR (electronic medical record) of a patient, or a part of it, also referred to as EHR (electronic health record). An EMR can, for example, comprise information about the patient's health such as one of the different pieces of information listed in the last paragraph. It is not necessary that every information in the EMR relates to the patient's body. For instance, information may for example pertain to the previous medical practitioner(s) who had contact with the patient and/or some data about the patient, assessed their health state, decided and/or carried out certain tests, operations and/or diagnoses. The EMR can comprise information about a hospital's or doctor's practice they obtained certain treatments and/or underwent certain tests and various other meta-information about the treatments, medications, tests and the body-related and/or mental-health-related information of the patient. An EMR can for example comprise (e.g. include) personal information about the patient. An EMR may also be anonymized so that the medical description of a defined, but personally un-identifiable patient is provided. In some examples, the EMR contains at least a part of the patient's medical history.

In one example, text input data may at least partially represent information about a person's condition obtained from the person himself/herself (self-assessment data). Besides objectively acquired anatomical, physiological and/or physical data, the well-being of the patient also plays an important role in the monitoring of health. Subjective feeling can also make a considerable contribution to the understanding of objectively acquired data and of the correlation between various data.

If, for example, it is captured by sensors that a person has experienced a physical strain, for example because the respiratory rate and the heart rate have risen, this may be because just low levels of physical exertion in everyday life place a strain on the person; however, another possibility is that the person consciously and gladly brought about the situation of physical strain, for example as part of a sporting activity. A self-assessment can provide clarity here about the causes of physiological features. For example, the issue of self-assessment plays an important role in clinical studies as well. In the English-language literature, the term "Patient Reported Outcomes" (abbreviation: PRO) is used as an umbrella term for many different concepts for measuring subjectively felt health statuses. The common basis of said concepts is that patient status is personally assessed and reported by the patient. Subjective feeling is collected by use of a self-assessment unit, with the aid of which the patient can record information about subjective health status. Preference is given to a list of questions which are to be answered by a patient. Preferably, the questions are answered with the aid of a computer (e.g. a tablet computer or a smartphone). One possibility is that the patient has questions displayed on a screen and/or read out via a speaker. One possibility is that the patient inputs the questions into a computer by inputting text via an input device (e.g., keyboard, mouse, touchscreen and/or a microphone (by means of speech input)). It is conceivable that a chatbot is used in order to facilitate the input of all items of information for the patient. It is conceivable that the questions are recurring questions which are to be answered once or more than once a day by a patient. It is conceivable that some of the questions are asked in response to a defined event. It is, for example, conceivable that it is captured by means of a sensor that a physiological parameter is outside a defined range (e.g. an increased respiratory rate is established). As a response to this event, the patient can, for example, receive a message via his/her smartphone or a smartwatch or the like that a defined event has occurred and that said patient should please answer one or more questions, for example in order to find out the causes and/or the accompanying circumstances in relation to the event. The questions can be of a psychometric nature and/or preference-based. At the heart of the psychometric approach is the description of the external, internal and anticipated experiences of the individual, by the individual. Said experiences can be based on the presence, the frequency and the intensity of symptoms, behaviors, capabilities or feelings of the individual questioned. The preference-based approach measures the value which patients assign to a health status.

Text input data is preferably present as a digital text file (such as an ASCII-file or XML-file). A text which is not present as a digital text file can be converted into a digital text file by well-known conversion tools. For example, a letter or a telefax can be scanned using an image scanner (flatbed scanner) or photographed using a digital camera and the resulting digital image file can then be analyzed by optical character recognition (OCR) technology in order to identify characters in the scanned copy and convert the scanned copy into a digital text file.

The term "audio" preferably means a (digitally) recorded sound. Preferably, the sound was produced (willingly or unintentionally, consciously or unconsciously) by the object or by interaction of the object with its environment and/or with another object.

In case of the object being a human being, the sound can be or comprise heartbeat, breathing noise, cough, swallow, sneeze, clear throat, scratch, voice, noises when knocking against part(s) of the body, joint noise, and/or other sounds and/or combinations thereof. Sound can be recorded via a microphone and converted into a digital audio file (such as a WAV-file) via an analog digital converter. If audio comprises spoken language, speech-to-text technology can be used to convert the digital audio file into a digital text file.

Some input data may be directly fed into an input layer of the machine learning model, some input data may be transformed into another representation before it is fed into an input layer of the machine learning model.

For example, if an electronic medical record or an extract therefrom is to be used, it may have to be converted into another format before it can be inputted into the machine learning model. Usually, a feature vector is created from information about an object in order to convert the information in a format that can be used by the machine learning model.

In machine learning, a feature vector is an n-dimensional vector of numerical features that represent an object, wherein n is an integer greater than 0. Many algorithms in machine learning require a numerical representation of objects, since such representations facilitate processing and statistical analysis. When representing images, the feature values might correspond to the pixels/voxels of an image, while when representing texts, the features might be the frequencies of occurrence of textual terms. Feature vectors are equivalent to the vectors of explanatory variables used in statistical procedures such as linear regression. The term "feature vector" shall also include single values, matrices, tensors, and the like.

Examples of feature vector generation methods can be found in various textbooks and scientific publications (see e.g. G.A. Tsihrintzis, L.C. Jain: Machine Learning Paradigms: Advances in Deep Learning-based Technological Applications, in: Learning and Analytics in Intelligent Systems Vol. 18, Springer Nature, 2020, ISBN: 9783030497248; K. Grzegorczyk: Vector representations of text data in deep learning, Doctoral Dissertation, 2018, arXiv:1901.01695v1 [cs.CL]).

The first input layer of the machine learning model of the present disclosure is configured to receive first input data derived from information about an object in a first modality. First input data can e.g. be an image or more than one image, or one or more feature vector(s) derived from one or more images. The first input data is also herein referred to as first input data of a first modality.

The second input layer of the machine learning model of the present disclosure is configured to receive second input data derived from information about the object in a second modality. Second input data can e.g. be a text, or one or more feature vector(s) derived from the text. The second input data is also herein referred to as second input data of a second modality.

It is possible that the machine learning model of the present disclosure comprises more than two input layers. The machine learning model may comprise a third input layer, wherein the third input layer is configured to receive third input data from information about the object in a third modality. Third input data can e.g. be an audio file, or one or more feature vector(s) derived from the audio file. The third input data is herein also referred to as third input data of a third modality.

Usually (but not necessarily), the first modality is different from the second modality and the third modality, and the second modality is different from the third modality.

With a varying number of $k$ modalities, the machine learning model usually has $k$ input layers and $k+1$ output layers, with k being an integer greater than 1. In other word: in case input data of or derived from 2 different modalities are inputted into the machine learning model, there are usually 2 input layers, and 2+1=3 output layers; in case input data of or derived from 3 different modalities are inputted into the machine learning model for training purposes, there are usually 3 input layers, and 3+1=4 output layers; in case input data of or derived from 4 different modalities are inputted into the machine learning model for training purposes, there are usually 4 input layers, and 4+1=5 output layers. The output layers will be described in more detail below.

For training of the machine learning model, training data are provided. The training data comprise, for each object of a multitude of objects, input data of at least two different modalities, first input data of a first modality and second input data of a second modality.

The term "multitude", as it is used herein, means a natural number greater than 10, usually greater than 100, preferably greater than 1000.

The training data may comprise third input data of a third modality; the training data may comprise fourth input data of a fourth modality, and so forth.

From the first and second (and if present third, fourth, ...) input data, augmented input data and masked input data are generated:

From the first input data, first augmented input data are generated. From the second input data, second augmented input data are generated. If third input data are present, third augmented input data are generated therefrom; if fourth input data are present, fourth augmented input data are generated therefrom, and so forth.

From the first augmented input data, first masked input data are generated. From the second augmented input data, second masked input data are generated. If third augmented input data are present, third masked input data are generated therefrom; if fourth augmented input data are present, fourth masked input data are generated, and so forth.

From each input data set at least two augmented data sets are generated: from the first input data, at least two sets of first augmented input data are generated; from the second input data, at least two sets of second augmented input data are generated, and so forth. The number of augmented input data sets per set of input data is usually between 2 and 5, however, the number can also be greater than 5.

Augmented input data are generated by applying one or more augmentation techniques to the input data.

Augmentation techniques used for image augmentation include geometric transformations, color space augmentations, kernel filters, mixing images, random erasing, feature space augmentation, adversarial training, generative adversarial networks, neural style transfer, and meta-learning.

Augmentation techniques used for text augmentation include replacement of words and/or phrases by synonyms, semantic similarity augmentation, round-trip translations, mixup augmentation, random insertions, random swap, and random deletions.

Augmentation techniques used for audio augmentation include noise injection, time shifting, pitch change, speed change, mixup, cutouts and/or random erasing in the audio spectrum, and vocal track length perturbation.

In case of images as input data, augmented images are preferably generated by applying one or more spatial augmentation techniques to the images. Examples of spatial augmentation techniques include rigid transformations, non-rigid transformations, affine transformations and non-affine transformations.

A rigid transformation does not change the size or shape of the image. Examples of rigid transformations include reflection, rotation, and translation.

A non-rigid transformation can change the size or shape, or both size and shape, of the image. Examples of non-rigid transformations include dilation and shear.

An affine transformation is a geometric transformation that preserves lines and parallelism, but not necessarily distances and angles. Examples of affine transformations include translation, scaling, homothety, similarity, reflection, rotation, shear mapping, and compositions of them in any combination and sequence.

Preferably, the one or more spatial augmentation techniques applied to images include rotation, elastic deformation, flipping, scaling, stretching, shearing, cropping, resizing and/or combinations thereof.

In a preferred embodiment, one or more of the following spatial augmentation techniques is applied to images: rotation, elastic deformation, flipping, scaling, stretching, shearing, wherein the one or more spatial augmentation techniques are preferably followed by cropping and resizing.

Image augmentation techniques are described in more detail in various publications. The following list is just a small excerpt:

Rotation: D. Itzkovich et al.: Using Augmentation to Improve the Robustness to Rotation of Deep Learning Segmentation in Robotic-Assisted Surgical Data, 2019 International Conference on Robotics and Automation (ICRA), Montreal, QC, Canada, 2019, pp. 5068-5075, doi: 10.1109/ICRA.2019.8793963.

Elastic deformation: E. Castro et al.: Elastic deformations for data augmentation in breast cancer mass detection, 2018 IEEE EMBS International Conference on Biomedical Health Informatics (BHI), pp. 230-234, 2018.

Flipping: Y.-J. Cha et al.: Autonomous Structural Visual Inspection Using Region-Based Deep Learning for Detecting Multiple Damage Types, Computer-Aided Civil and Infrastructure Engineering, 00, 1-17. 10.1111/mice.12334.

Scaling: S. Wang et al.: Multiple Sclerosis Identification by 14-Layer Convolutional Neural Network With Batch Normalization, Dropout, and Stochastic Pooling, Frontiers in Neuroscience, 12. 818. 10.3389/fnins.2018.00818.

Stretching: Z. Wang et al.: CNN Training with Twenty Samples for Crack Detection via Data Augmentation, Sensors 2020, 20, 4849.

Shearing: B. Hu et al.: A Preliminary Study on Data Augmentation of Deep Learning for Image Classification, Computer Vision and Pattern Recognition; Machine Learning (cs.LG); Image and Video Processing (eess.IV), arXiv:1906.11887.

Cropping and Resizing: R. Takahashi et al.: Data Augmentation using Random Image Cropping and Patching for Deep CNNs, Journal of Latex Class Files, Vol. 14, No. 8, 2015, arXiv:1811.09030.

Cutout: T. DeVries and G. W. Taylor: Improved Regularization of Convolutional Neural Networks with Cutout, arXiv:1708.04552, 2017.

Erasing: Z. Zhong et al.: Random Erasing Data Augmentation, arXiv:1708.04896, 2017.

In case of text as input data, augmented text data are commonly generated by adding and/or replacing and/or removing content (e.g. letters, numbers, words, tokens, and/or phrases). In the context of electronic health records, a common practice to add missing information is to iteratively imputing incomplete variables by regressing on the remaining observations - also referred to as Multiple Imputation by Chained Equations (MICE). For details see e.g. S.M. Meystre et al.: Extracting information from textual documents in the electronic health record: a review of recent research, Yearb Med Inform. 2008:128-44. PMID: 18660887; O. Sun: MICE-DA: A MICE method with Data Augmentation for missing data imputation, IEEE ICHI 2019 DACMI Challenge, 2019 IEEE International Conference on Healthcare Informatics (ICHI) (2019): 1-3.

Further text augmentation techniques are described in more detail in various publications. The following list is just a small excerpt:

V. Marivate, T. Sefara: Improving Short Text Classification Through Global Augmentation Methods, in: A. Holzinger et al. (eds): Machine Learning and Knowledge Extraction. CD-MAKE 2020. Lecture Notes in Computer Science, 2020, Vol. 12279. Springer, https://doi.org/ 10.1007/978-3-030-57321-8_21.

J. Wei, K. Zou: EDA: Easy Data Augmentation Techniques for Boosting Performance on Text Classification Tasks, arXiv:1901.11196 [cs.CL].

M. Abulaish, A. K. Sah: A Text Data Augmentation Approach for Improving the Performance of CNN, 2019, 11th International Conference on Communication Systems & Networks (COMSNETS), Bengaluru, India, 2019, pp. 625-630, doi: 10.1109/COMSNETS.2019.8711054.

A. Ollagnier, H. Williams: Text Augmentation Techniques for Clinical Case Classification, 2020, https://www.researchgate.net/publication/343949092.

In a further step, masked input data are generated from the augmented input data; from the first augmented input data, first masked input data are generated; from the second augmented input data, second masked input data are generated, and so forth. Usually, from each set of augmented data, one set of masked input data is generated.

The term "masking" refers to techniques which hide parts of the data or features (values of features) represented by data. In case of images, one or more pixels or regions of pixels can be set to a specific value (such as 0) or to (a) random value(s). In case of texts, one or more letters, words or phrases can be deleted or replaced by a specific letter, word or phrase. It is also possible that the values of the pixels in a certain region of an image are shuffled or that the letters of a word or a phrase or that words/phrases in a text are shuffled. In case of audio, one or more frequency channels, and/or consecutive time steps can be deleted.

Augmentation and/or masking operations may be performed on the respective input data and the resulting augmented input data and/or masked input data may then be stored on a non-transitory computer-readable storage medium for later training purposes. However, it is also possible to generate augmented input data and/or masked input data "in-memory" such that the augmented input data and/or masked input data may be generated temporarily and directly used for training purposes without storing the augmented input data and/or masked input data in a non-volatile storage medium.

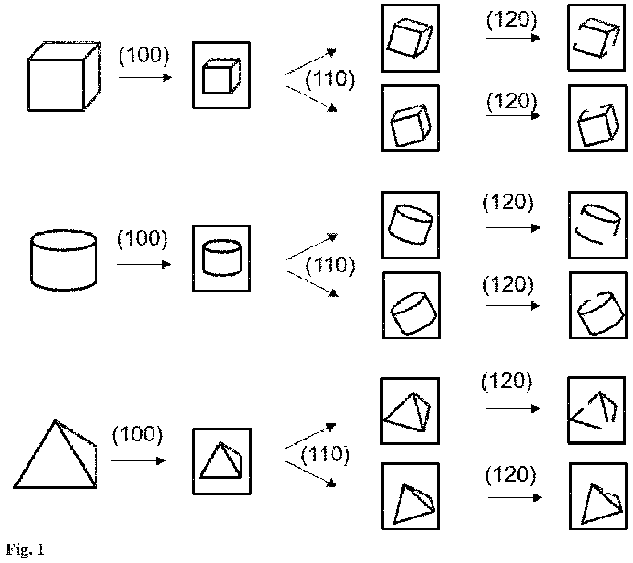

Fig. 1 shows schematically by way of an example, how augmented data and masked data are created for data characterizing three different objects, a cube, a cylinder and a tetrahedron. For each object input data representing the respective object are received (100).

From each set of input data two (or more) sets of augmented input data are generated (110). From each set of augmented data, a set of masked input data is generated (120). In case of the example shown in Fig. 1: the input data representing an object is an image of the object; augmentation is done by rotating the imaged objects; masking is done by cutting out regions of the images.

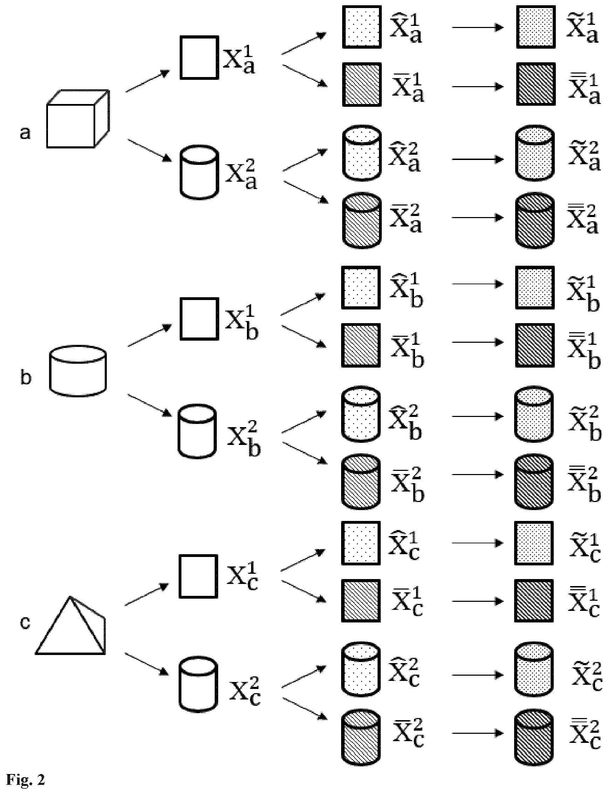

Fig. 2 shows schematically by way of another example, how augmented data and masked data are created for data characterizing three different objects, a cube a, a cylinder b, and a tetrahedron c. For each object i (i = a, b or c), input data of at least two different modalities (1 and 2) are received, first input data $X_i^1$ of a modality 1 and second input data $X_i^2$ of a modality 2. From each set of input data two sets of augmented input data are generated. From first input data $X_i^1$ of modality 1, two sets of first augmented input data $\widehat{X}_i^1$ and $\overline{X}_i^1$ are generated; from second input data $X_i^2$ of modality 2, two sets of second augmented input data $\widehat{X}_i^2$ o2 and $\overline{X}_i^2$ are generated. From each set of augmented input data, masked input data are generated. From augmented input data $\widehat{X}_i^1$, masked input data $\widetilde{X}_i^1$ are generated, from augmented input data $\overline{X}_i^1$, masked input data $\widetilde{\overline{X}}_i^1$ are generated; from augmented input data $\widehat{X}_i^2$, masked input data $\widetilde{X}_i^2$ are generated, from augmented input data $\overline{X}_i^2$, masked input data $\widetilde{\overline{X}}_i^2$ are generated.

The input data, augmented input data and masked input data can then be used for training the machine learning model.

During training, first masked input data is inputted into the first input layer and the machine learning model is trained to reconstruct the first augmented input data from the first masked input data via the first output layer (first reconstruction task).

In addition, second masked input data is inputted into the second input layer and the machine learning model is trained to reconstruct the second augmented input data from the second masked input data via the second output layer (second reconstruction task).

In addition, the machine learning model is trained to generate a joint representation from the first masked input data inputted into the first input layer and the second masked input data inputted into the second input layer, and to discriminate joint representations which originate from the same input data from joint representations which do not originate from the same input data but from different input data (discrimination task).

If a further set of input data is available (such as third input data), the machine learning model is trained to perform an additional reconstruction task (e.g. a third reconstruction task). In addition, the machine learning model is trained to generate a joint representation from all masked input data inputted into the input layers and to discriminate joint representations which originate from the same input data from joint representations which do not originate from the same input data but from different input data.

During training, parameters of the machine learning model are modified in a way that improves the reconstruction quality and the discrimination quality. This can be e.g. done by computing one or more loss values, the loss value(s) indicating the quality of the task(s) performed, and modifying parameters of the machine learning model so that the loss value(s) is/are minimized.

For each reconstruction task, a reconstruction loss can be computed, e.g. a first reconstruction loss $L_r^1$ for the first reconstruction task, and a second reconstruction loss $L_r^2$ for the second reconstruction task. The mean square error (MSE) between input and output can be used as objective function for the proxy task of the reconstructions. Furthermore, Huber loss, cross-entropy and other functions can be used as objective function for the proxy task of reconstructions.

For the discrimination task, a contrastive loss $L_c$ can be computed. Such contrastive loss can e.g. be the normalized temperature-scaled cross entropy (NT-Xent) (see e.g. T. Chen et al.: "A simple framework for contrastive learning of visual representations", arXiv preprint arXiv:2002.05709, 2020, in particular equation (1)). Further details about contrastive learning can also be found in: P. Khosla et al.: Supervised Contrastive Learning, Computer Vision and Pattern Recognition; arXiv:2004.11362 [cs.LG]; J. Dippel, S. Vogler, J, Höhne: Towards Fine-grained Visual Representations by Combining Contrastive Learning with Image Reconstruction and Attention-weighted Pooling, arXiv:2104.04323v1 [cs.CV]).

The training loss $L_T$ (total loss) can e.g. be the sum of the reconstruction losses and the contrastive loss. In case of two reconstruction tasks and one discrimination task the training loss $L_T$ can be calculated by the following equation:

$$L_T = \alpha \cdot L_r^1 + \beta \cdot L_r^2 + \gamma \cdot L_c$$

in which $\alpha$, $\beta$ and $\gamma$ are weighting factors which can be used to weight the losses, e.g. to give to a certain loss more weight than to another loss. $\alpha$, $\beta$ and $\gamma$ can be any value greater than zero; usually $\alpha$, $\beta$ and $\gamma$ represent a value greater than zero and smaller or equal to one. In case of $\alpha = \beta = \gamma = 1$, each loss is given the same weight. Note, that $\alpha$, $\beta$ and $\gamma$ can vary during the training process. It is for example possible to start the training process with giving greater weight to the contrastive loss than to the reconstruction loss, and, once the deep neural network has gained a pre-defined accuracy in performing the discrimination task, complete the training with giving greater weight to one or both (or more in case of data of more than two modalities) reconstruction task(s).

In a preferred embodiment of the present disclosure, the machine learning model is or comprises a deep neural network. A deep neural network is a biologically inspired computational model. Such a deep neural network usually comprises at least three layers of processing elements: a first layer with input neurons, an Nth layer with at least one output neuron, and N-2 inner layers, where N is a natural number greater than 2. In such a network, the input neurons serve to receive the input data. If the input data constitutes or comprises an image, there is usually one input neuron for each pixel/voxel of the input image; there can be additional input neurons for additional input data such as data about the object represented by the input image, the type of image, the way the image was acquired and/or the like. The output neurons serve to output one or more values, e.g. a reconstructed image, a score, a regression result and/or others.

The processing elements of the layers are interconnected in a predetermined pattern with predetermined connection weights therebetween. Each network node represents a (simple) calculation of the weighted sum of inputs from prior nodes and a non-linear output function. The combined calculation of the network nodes relates the inputs to the outputs.

The training can be performed with a set of training data comprising input data of a multitude of objects.

When trained, the connection weights between the processing elements contain information regarding the relationship between the input data and the output data.

Each network node can represent a (simple) calculation of the weighted sum of inputs from prior nodes and a non-linear output function. The combined calculation of the network nodes relates the inputs to the outputs.

The network weights can be initialized with small random values or with the weights of a prior partially trained network. The training data inputs are applied to the network and the output values are calculated for each training sample. The network output values can be compared to the target output values. A backpropagation algorithm can be applied to correct the weight values in directions that reduce the error between calculated outputs and targets. The process is iterated until no further reduction in error can be made or until a predefined prediction accuracy has been reached.

A cross-validation method can be employed to split the data into training and validation data sets. The training data set is used in the error backpropagation adjustment of the network weights. The validation data set is used to verify that the trained network generalizes to make good predictions. The best network weight set can be taken as the one that presumably best predicts the outputs of the test data set. Similarly, varying the number of network hidden nodes and determining the network that performs best with the data sets optimizes the number of hidden nodes.

In a preferred embodiment, the deep neural network is or comprises a convolutional neural network (CNN). A CNN is a class of deep neural networks, most commonly applied to e.g. analyzing visual imagery. A CNN comprises an input layer with input neurons, an output layer with at least one output neuron, as well as multiple hidden layers between the input layer and the output layer.

The hidden layers of a CNN typically comprise convolutional layers, ReLU (Rectified Linear Units) layers i.e. activation function, pooling layers, fully connected layers and normalization layers.

The nodes in the CNN input layer can be organized into a set of "filters" (feature detectors), and the output of each set of filters is propagated to nodes in successive layers of the network. The computations for a CNN include applying the mathematical convolution operation with each filter to produce the output of that filter. Convolution is a specialized kind of mathematical operation performed with two functions to produce a third function. In convolutional network terminology, the first function of the convolution can be referred to as the input, while the second function can be referred to as the convolution kernel. The output may be referred to as the feature map. For example, the input of a convolution layer can be a multidimensional array of data that defines the various color components of an input image. The convolution kernel can be a multidimensional array of parameters, where the parameters are adapted by the training process for the neural network.

The objective of the convolution operation is to extract features (such as e.g. edges from an input image). Conventionally, the first convolutional layer is responsible for capturing the low-level features such as edges, color, gradient orientation, etc. With added layers, the architecture adapts to the high-level features as well, giving a network which has the wholesome understanding of images in the dataset. Similar to the convolutional layer, the pooling layer is responsible for reducing the spatial size of the feature maps. It is useful for extracting dominant features with some degree of rotational and positional invariance, thus maintaining the process of effectively training of the model. Adding a fully-connected layer is a way of learning non-linear combinations of the high-level features as represented by the output of the convolutional part.

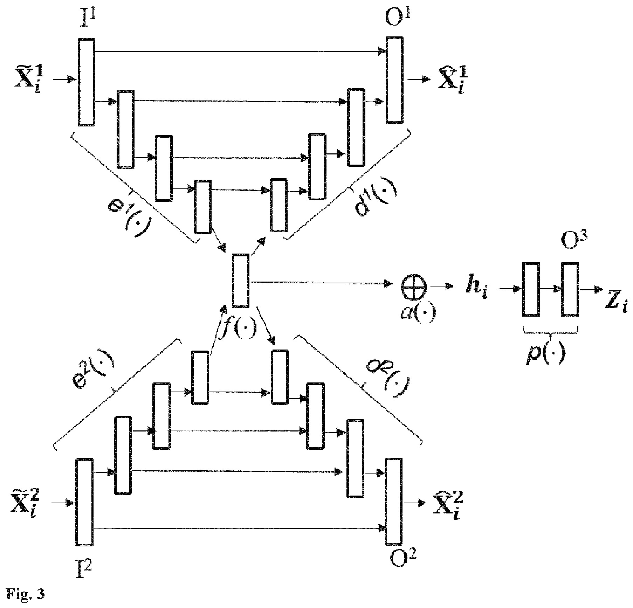

Fig. 3 shows schematically a preferred embodiment of the architecture of the machine learning model according to the present disclosure. The machine learning model, as depicted in Fig. 3, can be divided into seven components. The machine learning model comprises first encoder $e^1(\cdot)$, first decoder $d^1(\cdot)$, second encoder $e^2(\cdot)$, second decoder $d^2(\cdot)$, fusion component f($\cdot$), attention weighted pooling $a(\cdot)$ and projection head $p(\cdot)$.

Note, Fig. 3 shows an example of the architecture of a machine learning model that can be used to learn multimodal representations of data of two different modalities. If representations of data of three or more different modalities are to be generated by a machine learning model, such a machine learning model can comprise a third (and fourth, fifth,...) encoder and a third (and forth, fifth,...) decoder. All encoders are merged into one embedding: the joint representation of the different input data of different modality.

The aim of the encoders is to generate a joint representation (embedding) of the multimodal input data. The aim of the decoders is to reconstruct unmasked data from the joint representation.

The projection head serves to map the joint representation to a space where contrastive loss is applied. In a preferred embodiment, the projection head performs a learnable nonlinear transformation. Such a nonlinear transformation improves the quality of the learned representations. The projection head can e.g. be a multi-layer perceptron with one hidden ReLU layer (ReLU: Rectified Linear Unit).

The attention weighted pooling aggregates the spatial content of the final feature map of the encoders in a parametric manner.

In the training process, the model receives

- first masked input data $\widetilde{X}_i^1$ via input layer I$^1$, and

- second masked input data $\widetilde{X}_i^2$ via input layer I$^2$,

and the model outputs

- reconstructed first augmented input data $\widehat{X}_i^1 = d^1(f(e^1\left(\widetilde{X}_i^1\right), e^2\left(\widetilde{X}_i^2\right)))$ via output layer O$^1$,

- reconstructed second augmented input data $\widehat{X}_i^2 = d^2(f(e^1\left(\widetilde{X}_i^1\right), e^2\left(\widetilde{X}_i^2\right)))$ via output layer O$^2$, and

- contrastive representation

$$Z_i = p\left(a\left(f\left(e^1\left(\widetilde{X}_i^1\right), e^2\left(\widetilde{X}_i^2\right)\right)\right)\right)$$ via output layer O$^3$.

Function $f(\cdot)$ is the fusion component that combines the representation of the two (or more) modalities into one joint representation. The fusion can be done by first concatenating the vectors $e^1\left(\widetilde{X}_i^1\right)$ and $e^2\left(\widetilde{X}_i^2\right)$, and then performing convolution operations on the concatenated representation.

Function $a(\cdot)$ is the attention weighted pooling component. The attention weighted pooling mechanism computes a weight for each coordinate in the activation map and then weighs them respectively before applying the global average pooling. For further details, see e.g. A. Radford et al.: Learning transferable visual models from natural language supervision, https://cdn.openai.com/papers/Learning_Transferable_Visual_Models_From_Natural_Language_Supe rvision.pdf, 2021, arXiv:2103.00020 [cs.CV]). An example is also given e.g. in arXiv:2104.04323v1 [cs.CV].

For the encoder and decoder of the machine learning model, various backbones can be used such as the U-net (see e.g. O. Ronneberger et al.: U-net: Convolutional networks for biomedical image segmentation, in: International Conference on Medical image computing and computer-assisted intervention, pp. 234-241, Springer, 2015, https://doi.org/10.1007/978-3-319-24574-4_28) or the DenseNet (e.g. G. Huang et al.: "Densely connected convolutional networks", IEEE Conference on Computer Vision and Pattern Recognition, 2017, pp. 2261-2269, doi: 10.1109/CVPR.2017.243.).

Once trained, the projection head $p(\cdot)$, and the decoders $d^1(\cdot)$, $d^2(\cdot)$ can be discarded and the remaining machine learning model comprising the encoders $e^1(\cdot)$, $e^2(\cdot)$ and the attention pooling $a(\cdot)$ can be used to generate joint representations of multimodal input data with

$$h_i = a\left(f\left(e^1\left(\widetilde{X}_i^1\right), e^2\left(\widetilde{X}_i^2\right)\right)\right).$$

Once trained, the machine learning model (the trained machine learning model) can be used, e.g., to identify, for a first object, one or more second objects, the second object(s) having a predefined similarity to the first object.

The first object is characterized by certain features. Information about the features of the first object can be present in different modalities. From the information about the features of first object, input data can be generated. The input data can be input data of a first modality (e.g. one or more image(s) or one or more text file(s) or one or more audio file(s)) or input data of a first modality and a second modality (e.g. one or more image(s) and one or more text file(s), or one or more image(s) and one or more audio file(s), or one or more text file(s) and one or audio file(s)) or input data of a first modality and a second modality and a third modality (e.g. one or more image(s) and one or more text file(s) and or one or more audio file(s)) or input data of more than three modalities.

The input data (or feature vectors generated therefrom as described above) can be inputted into the trained machine learning model. The input data of a certain modality are inputted into the input layer that is configured to receive data of the respective modality. Input data of a first modality are e.g. inputted into the first input layer that is configured to receive data of the first modality; input data of a second modality are e.g. inputted into the second input layer that is configured to receive data of the second modality, and so forth.

If, for example, the trained machine learning comprises two input layers, a first input layer for receiving input data of a first modality, and a second input layer for receiving input data of a second modality, but the input data related to the first object is only data of the first modality, such input data is inputted into the first input layer. In this example, it is possible to not input any data into the second input layer, or to input a zero vector (a feature vector depending only the values 0) into the second input layer.

The trained machine learning model generates, on the basis of the input data related to the first object, a representation. The representation is a representation of the input data, and, therefore, a representation of the features of the first object, and, therefore, a representation of the first object itself. If input data of a first modality and input data of a second modality is used for generating a representation of the first object, the generated representation is a joint representation of the input data of the first modality and the input data of the second modality.

The representation of the first object generated by the trained machine learning model can be e.g. compared with the representation(s) of one or more other object(s).

In other words: a first representation can be generated for a first object, and the first representation can be compared with one or more second representation(s) of one or more second object(s). The representation(s) of the second object(s) can be generated analogously to the first representation of the first object: by inputting object data (input data) representing the second object(s) into the trained deep neural network.

In a preferred embodiment, a multitude of representations for a multitude of objects have already been generated in the past, and the representations are stored in a data storage. Such stored representations can be used for comparison.

In one embodiment of the present disclosure, input data related to a first object is inputted into the machine learning model, thereby receiving from the machine learning model a first representation of the first object. The first representation of the first object is then compared with a second representation of a second object (one to one comparison). The second representation of the second object can be generated from input data related to the second object via the machine learning model: the input data related to the second object is inputted into the machine learning model, thereby receiving a second representation, the second representation representing the second object. It is also possible that the second representation is obtained from a data storage. It is possible that the second representation was generated in the past and stored in the data storage.

In another embodiment of the present disclosure, the first representation of the first object is compared with a plurality of representations of a plurality of objects (one to many comparison). Again, each representation of an object of the plurality of objects can be generated from input data relating to the object by inputting the respective input data into the machine learning model and receiving the representation of the object. Again, one or more presentations of objects may have been created in the past and stored in a data storage. These representations can be obtained from the data storage and used for comparison.

In another embodiment of the present disclosure, a plurality of first representations of first objects can be compared to one second representation of a second object (many to one comparison). Each first representation of the first object as well as the second representation of the second object can be generated from input data related to the respective object by inputting the input data into the machine learning model and receiving the respective representation of the respective object. One or more first representations of first objects may have been created in the past and stored in a data storage. These representations can be obtained from the data storage and used for comparison.

In another embodiment of the present disclosure, a first representation of a first object is compared with a second representation of the first object. The first representation can be generated from first input data related to the object at a first point in time, and the second representation of the first object can be generated from second input data related to the object at a second point in time. The first point in time can be earlier or later than the second point in time. In other words: different sets of input data representing an object at different points in time can be used to generate different representations of the same object which can then be compared with each other.

Comparing representations of objects can mean determining the level of conformity of the representations and/or determining the differences between the representations.

It should be noted that the representation of two objects can be similar although the input modalities are different. This is a great strength of the present invention. In the real world, each patient has a unique diagnostic journey, hence a unique EMR (and input data). The model learns to "see the pattern" and still finds similarity among the patients (2 patients with Diabetes II or chronic cough).

Preferably, comparing two or more representations (objects) comprises computing a similarity value for a pair of compared representations, the similarity value quantifying the degree of similarity between the representations.

The similarity value can e.g. be a rational number e.g. from 0 to 1, whereas a similarity value of 0 can mean that there are no similarities between the representations and a similarity value of 1 can mean that the representations are identical. It is also possible that the similarity value is a percentage, whereas a percentage of 0 can mean that there are no similarities between the representations and a percentage of 100% can mean that the representations are identical. Different quantifications, gradations, and ranges are possible. It is for example possible that the similarity value of two representations which have no similarities is -∞ whereas the similarity value of two identical representations is +oo. It is also possible that the similarity value ranges from -1 to 1.

Usually but not necessarily, the greater the match of the representations and/or the more similar they are, the higher is the similarity value. For the sake of simplicity, the present description assumes that the similarity value is always positive, and the greater the similarity value is, the more similar the two representations are. However, this is not to be understood as a limitation of the present invention.

The similarity of two (or more) representations can also be quantified by computing a distance between the two (or more) representations. Usually, the closer the distance, the greater the similarity.

For the sake of simplicity, it is assumed for the following explanations that the representations are in the form of N-dimensional vectors. For example, the representation of the first object may be an $N$-dimensional vector $a = [a_1, a_2, \ldots, a_N]$, and the representation of the second object may be an $N$-dimensional vector $b = [b_1, b_2, \ldots, b_N]$.

The similarity value $s(a, b)$ quantifying the similarity between the two representations can e.g. be the Cosine Similarity:

$$s(a, b) = \cos(\theta) = \frac{a \cdot b}{\|a\| \|b\|}$$

in which $\theta$ is the angle between the two vectors $a$ and $b$,
$\|a\|$ is the Euclidean norm of vector $a$ (its length) defined as

$$\|a\| = \sqrt{a_1^2 + a_2^2 + \cdots + a_N^2}$$

and in which $\|b\|$ is the Euclidean norm of vector b (its length) defined as

$$\|b\| = \sqrt{b_1^2 + b_2^2 + \cdots + b_N^2}$$

Mathematically, the Cosine Similarity measures the cosine of the angle $\theta$ between two vectors $a$ and $b$ projected in a multi-dimensional space. The Cosine Similarity captures the orientation (the angle) of each vector and not the length.

In order to include the length of each vector, the Euclidean Distance can be computed:

$$d(a, b) = \sqrt{\sum_{i=1}^{N} (a_i - b_i)^2}$$

Instead of (or in addition to) the Euclidean Distance, other distances can be computed, such as the Manhattan Distance, Chebyshev Distance, Minkowski Distance, Weighted Minkowski Distance, Mahalanobis Distance, Hamming Distance, Canberra Distance, Bray Curtis Distance, or a combination thereof.

A distance $d(a, b)$ can be converted into a similarity value $s(a, b)$ e.g. by the following equation:

$$s(a, b) = \frac{1}{1 + d(a, b)}$$

The similarity value and/or information about the one or more second object(s) can be outputted. Outputting can mean printing out information (via a printer), displaying it on a monitor and/or storing it in a data storage.

In a preferred embodiment, a number $m$ of second objects from a multitude of objects is identified, each object of the number $m$ of objects being more similar to the first object than every other object of the multitude of objects that does not belong to the number $m$ of second objects. In other words: a number $m$ of second objects that are most similar to the first object are identified. The number $m$ is a natural number equal to or greater than 1.

In another preferred embodiment, a number $p$ of second objects that are most different from the first object identified. The number $p$ is a natural number equal to or greater than 1.

It is also possible to sort the number $m$ of second objects and/or the number $p$ of second objects by the magnitude of their similarity value.

In another preferred embodiment, a number $q$ of second objects is identified, each second object of the number $q$ of second objects having a predefined similarity to the first object. The number $q$ is a natural number equal to or greater than 0. The identification of objects having a predefined similarity to the first object can e.g. be done by comparing each similarity value with one or more predefined thresholds.

In case of one threshold, each similarity value can be compared with the predefined threshold, and objects for which the similarity value is equal to or greater than the predefined threshold can be selected.

In case of two thresholds, e.g. a lower threshold and an upper threshold, each similarity value can be compared with the lower and/or upper predefined threshold, and objects for which the similarity value is greater than the lower threshold and smaller than the upper threshold can be selected.

Further filter and sorting options are conceivable.

Some application examples from the medical field are explained hereinafter, without limiting the invention to the examples and/or this field.

The machine learning model according to the present disclosure can e.g. be trained on a training data set, the training data set comprising, for each patient of a multitude of patient, personal data relating to the patient. The personal data can e.g. comprise information about the patient's age, height, weight, gender, eye color, hair color, skin color, blood group, existing illnesses and/or conditions, pre-existing illnesses and/or conditions and/or the like, as described above. The personal data comprise data of at least two modalities. The personal data is used for training the machine learning model to generate multi-modal representations of patients based on personal data.

The trained machine learning model can be e.g. used by a healthcare practitioner (e.g. a doctor). The healthcare practitioner may examine a new patient. The new patient may show symptoms of a disease. The healthcare practitioner may be interested in finding out if there have been any patients with similar symptoms in the past. The healthcare practitioner may be interested in what tests were done on these patients, what disease(s) they were diagnosed with, and how these patients were treated. All of this information tells the healthcare practitioner what tests should be done on the new patient (or do not need to be done, thus reducing time until diagnosis and/or avoiding costs and/or non-burdening the patient unnecessarily), what disease(s) the new patient might have, and how the new patient might be treated.

The healthcare practitioner can input personal data about the new patient into the trained machine learning model. The trained machine learning model generates a representation of the new patient on the basis of the personal data. The representation of the new patient can then be compared with other representations of other patients. It is possible to identify a number *m* of patients who are most similar to the new patient.

It is conceivable that, when identifying similar patients, the focus of the search is directed to one or more defined features, while other features may be neglected. If for example, the personal data about the new patient comprises information about a long-history disease that is unrelated to the current symptoms, it may be neglected. Neglecting of information can mean that the data about these information are not inputted into the trained machine learning model. It is for example possible to set the respective values of the feature vector to zero. It is conceivable that the healthcare practitioner only uses those personal data as input data for the trained machine learning model that the healthcare practitioner considers relevant for a diagnosis.

Once a number *m* of similar patients has been identified, e.g. by computing a similarity value, the similarity value quantifying the similarity between the representation of the new patient and the representations of other patients, and by ranking the patients by their similarity value, the healthcare practitioner may identify personal data in datasets related to the (most) similar patients which do not yet exist for the new patient but which may be helpful to make a diagnosis. The healthcare practitioner may identify successful therapies in the datasets.

The trained machine learning model can be used not only for diagnostic purposes and for therapy planning, but also to predict the course of a disease. For example, patients can be identified who have had symptoms similar to the new patient in the past. Once the patients have been identified, it is possible to study how a disease developed under certain conditions. It can be examined how the health status of the new patient will develop if defined measures are taken. This prediction can be used for therapy planning.

The described workflow of a healthcare practitioner utilizing the trained machine learning model to probe historical, high-dimensional data comprises a typical human-in-the-loop setup. This is desired from an ethical, legal and medical perspective. But in principle it is possible to automatically diagnose a disease and/or generate treatment recommendations or even automatically perform a treatment.

The operations in accordance with the teachings herein may be performed by at least one computer system specially constructed for the desired purposes or at least one general-purpose computer system specially configured for the desired purpose by at least one computer program stored in a typically non-transitory computer readable storage medium.

The term "non-transitory" is used herein to exclude transitory, propagating signals or waves, but to otherwise include any volatile or non-volatile computer memory technology suitable to the application.

A "computer system" is a system for electronic data processing that processes data by means of programmable calculation rules. Such a system usually comprises a "computer", that unit which comprises a processor for carrying out logical operations, and also peripherals.

In computer technology, "peripherals" refer to all devices which are connected to the computer and serve for the control of the computer and/or as input and output devices. Examples thereof are monitor (screen), printer, scanner, mouse, keyboard, drives, camera, microphone, loudspeaker, etc. Internal ports and expansion cards are, too, considered to be peripherals in computer technology.

Computer systems of today are frequently divided into desktop PCs, portable PCs, laptops, notebooks, netbooks and tablet PCs and so-called handhelds (e.g. smartphone); all these systems can be utilized for carrying out the invention.

The term "process" as used above is intended to include any type of computation or manipulation or transformation of data represented as physical, e.g. electronic, phenomena which may occur or reside e.g. within registers and/or memories of at least one computer or processor. The term processor includes a single processing unit or a plurality of distributed or remote such units.

Any suitable input device, such as but not limited to a camera sensor, may be used to generate or otherwise provide information received by the system and methods shown and described herein. Any suitable output device or display may be used to display or output information generated by the system and methods shown and described herein. Any suitable processor/s may be employed to compute or generate information as described herein and/or to perform functionalities described herein and/or to implement any engine, interface or other system described herein. Any suitable computerized data storage e.g. computer memory may be used to store information received by or generated by the systems shown and described herein. Functionalities shown and described herein may be divided between a server computer and a plurality of client computers. These or any other computerized components shown and described herein may communicate between themselves via a suitable computer network.

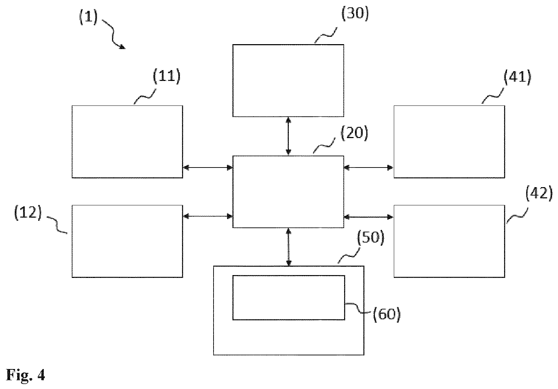

Fig. 4 illustrates a computer system (1) according to some example implementations of the present disclosure in more detail.

Generally, a computer system of exemplary implementations of the present disclosure may be referred to as a computer and may comprise, include, or be embodied in one or more fixed or portable electronic devices. The computer may include one or more of each of a number of components such as, for example, processing unit (20) connected to a memory (50) (e.g., storage device).

The processing unit (20) may be composed of one or more processors alone or in combination with one or more memories. The processing unit is generally any piece of computer hardware that is capable of processing information such as, for example, data, computer programs and/or other suitable electronic information. The processing unit is composed of a collection of electronic circuits some of which may be packaged as an integrated circuit or multiple interconnected integrated circuits (an integrated circuit at times more commonly referred to as a "chip"). The processing unit may be configured to execute computer programs, which may be stored onboard the processing unit or otherwise stored in the memory (50) of the same or another computer.

The processing unit (20) may be a number of processors, a multi-core processor or some other type of processor, depending on the particular implementation. Further, the processing unit may be implemented using a number of heterogeneous processor systems in which a main processor is present with one or more secondary processors on a single chip. As another illustrative example, the processing unit may be a symmetric multi-processor system containing multiple processors of the same type. In yet another example, the processing unit may be embodied as or otherwise include one or more ASICs, FPGAs or the like. Thus, although the processing unit may be capable of executing a computer program to perform one or more functions, the processing unit of various examples may be capable of performing one or more functions without the aid of a computer program. In either instance, the processing unit may be appropriately programmed to perform functions or operations according to example implementations of the present disclosure.

The memory (50) is generally any piece of computer hardware that is capable of storing information such as, for example, data, computer programs (e.g., computer-readable program code (60)) and/or other suitable information either on a temporary basis and/or a permanent basis. The memory may include volatile and/or non-volatile memory, and may be fixed or removable. Examples of suitable memory include random access memory (RAM), read-only memory (ROM), a hard drive, a flash memory, a thumb drive, a removable computer diskette, an optical disk, a magnetic tape or some combination of the above. Optical disks may include compact disk - read only memory (CD-ROM), compact disk - read/write (CD-R/W), DVD, Blu-ray disk or the like. In various instances, the memory may be referred to as a computer-readable storage medium. The computer-readable storage medium is a non-transitory device capable of storing information, and is distinguishable from computer-readable transmission media such as electronic transitory signals capable of carrying information from one location to another. Computer-readable medium as described herein may generally refer to a computer-readable storage medium or computer-readable transmission medium.

In addition to the memory (50), the processing unit (20) may also be connected to one or more interfaces for displaying, transmitting and/or receiving information. The interfaces may include one or more communications interfaces and/or one or more user interfaces. The communications interface(s) may be configured to transmit and/or receive information, such as to and/or from other computer(s), network(s), database(s) or the like. The communications interface may be configured to transmit and/or receive information by physical (wired) and/or wireless communications links. The communications interface(s) may include interface(s) (41) to connect to a network, such as using technologies such as cellular telephone, Wi-Fi, satellite, cable, digital subscriber line (DSL), fiber optics and the like. In some examples, the communications interface(s) may include one or more short-range communications interfaces (42) configured to connect devices using short-range communications technologies such as NFC, RFID, Bluetooth, Bluetooth LE, ZigBee, infrared (e.g., IrDA) or the like.

The user interfaces may include a display (30). The display may be configured to present or otherwise display information to a user, suitable examples of which include a liquid crystal display (LCD), light-emitting diode display (LED), plasma display panel (PDP) or the like.

The user input interface(s) (11) may be wired or wireless, and may be configured to receive information from a user into the computer system (1), such as for processing, storage and/or display. Suitable examples of user input interfaces include a microphone, image or video capture device, keyboard or keypad, joystick, touch-sensitive surface (separate from or integrated into a touchscreen) or the like. In some examples, the user interfaces may include automatic identification and data capture (AIDC) technology (12) for machine-readable information. This may include barcode, radio frequency identification (RFID), magnetic stripes, optical character recognition (OCR), integrated circuit card (ICC), and the like. The user interfaces may further include one or more interfaces for communicating with peripherals such as printers and the like.

As indicated above, program code instructions may be stored in memory, and executed by processing unit that is thereby programmed, to implement functions of the systems, subsystems, tools and their respective elements described herein. As will be appreciated, any suitable program code instructions may be loaded onto a computer or other programmable apparatus from a computer-readable storage medium to produce a particular machine, such that the particular machine becomes a means for implementing the functions specified herein. These program code instructions may also be stored in a computer-readable storage medium that can direct a computer, processing unit or other programmable apparatus to function in a particular manner to thereby generate a particular machine or particular article of manufacture. The instructions stored in the computer-readable storage medium may produce an article of manufacture, where the article of manufacture becomes a means for implementing functions described herein. The program code instructions may be retrieved from a computer-readable storage medium and loaded into a computer, processing unit or other programmable apparatus to configure the computer, processing unit or other programmable apparatus to execute operations to be performed on or by the computer, processing unit or other programmable apparatus.

Retrieval, loading and execution of the program code instructions may be performed sequentially such that one instruction is retrieved, loaded and executed at a time. In some example implementations, retrieval, loading and/or execution may be performed in parallel such that multiple instructions are retrieved, loaded, and/or executed together. Execution of the program code instructions may produce a computer-implemented process such that the instructions executed by the computer, processing circuitry or other programmable apparatus provide operations for implementing functions described herein.

Execution of instructions by processing unit, or storage of instructions in a computer-readable storage medium, supports combinations of operations for performing the specified functions. In this manner, a computer system (1) may include processing unit (20) and a computer-readable storage medium or memory (50) coupled to the processing circuitry, where the processing circuitry is configured to execute computer-readable program code (60) stored in the memory. It will also be understood that one or more functions, and combinations of functions, may be implemented by special purpose hardware-based computer systems and/or processing circuitry which perform the specified functions, or combinations of special purpose hardware and program code instructions.

**Claims**

1. A computer-implemented method, the method comprising:

- providing a machine learning model, the machine learning model comprising:

• a first input layer ($I^1$),
• a second input layer ($I^2$),
• a first output layer ($O^1$),
• a second output layer ($O^2$), and
• a third output layer ($O^3$),

- providing training data for training the machine learning model, wherein providing training data comprises:

• receiving, for each object (i) of a multitude of objects (a, b, c), input data of at least two different modalities, first input data ($X_i^1$) of a first modality and second input data ($X_i^2$) of a second modality,
• generating first augmented input data ($\hat{X}_i^1, \overline{X}_i^1$) from the first input data ($X_i^1$) and second augmented input data ($\hat{X}_i^2, \overline{X}_i^2$) from the second input data ($X_i^2$),
• generating first masked input data ($\widetilde{X}_i^1, \overline{\overline{X}}_i^1$) from the first augmented input data ($\hat{X}_i^1, \overline{X}_i^1$) and second masked input data ($\widetilde{X}_i^2, \overline{\overline{X}}_i^2$) from the second augmented input data ($\hat{X}_i^2, \overline{X}_i^2$),

- training the machine learning model to perform a combined reconstruction and discrimination task, the training comprising:

• inputting the first masked input data (

$\widetilde{X}_i^1, \overline{\overline{X}}_i^1$ ) into the first input layer (I¹),
• inputting the second masked input data (
$\widetilde{X}_i^2, \overline{\overline{X}}_i^2$ ) into the second input layer (I²),
• reconstructing the first augmented input data ( $\widehat{X}_i^1, \overline{X}_i^1$ ) from the first masked input data ( $\widetilde{X}_i^1, \overline{\overline{X}}_i^1$ ) via the first output layer (O¹),
• reconstructing the second augmented input data ( $\widehat{X}_i^2, \overline{X}_i^2$ ) from the second masked input data ( $\widetilde{X}_i^2, \overline{\overline{X}}_i^2$ ) via the second output layer (O²),
• generating a joint representation ($Z_i$) of the first masked input data ( $\widetilde{X}_i^1, \overline{\overline{X}}_i^1$ ) and the second masked input data ( $\widetilde{X}_i^2, \overline{\overline{X}}_i^2$ ) via the third output layer (O³), and
• discriminating joint representations which were generated from input data of the same object from joint contrastive representations which were generated from input data of different objects,

- receiving input data related to a first object,
- inputting the input data related to the first object into the trained machine learning model,
- receiving from the trained machine learning model a first representation of the first object via the third output layer (O³),
- receiving at least one second representation of at least one second object,
- computing a similarity value, the similarity value indicating the similarity between the first representation and the at least one second representation,
- outputting the similarity value,
wherein the first object, the at least one second object and each object of the multitude of objects is a human being, preferably a patient,
wherein the first object is different from the at least one second object, or the first object is identical to the at least one second object, and the first representation is a representation of the first object at a first point in time and the at least one second representation represents the first object at least one second point in time;

wherein the first input data ( $X_i^1$ ) of the first modality comprises one or more images and the second input data ( $X_i^2$ ) of the second modality comprises or is derived from text files and/or audio files.

2. The method according to claim 1, wherein the training data and the input data related to the first object comprise personal data, the personal data being selected from one or more of the following group: age, height, weight, gender, eye color, hair color, skin color, blood group, blood pressure, resting heart rate, heart rate variability, vagus nerve tone, hematocrit, sugar concentration in urine, existing illnesses, existing conditions, pre-existing illnesses, pre-existing conditions, eyesight, consumption of alcohol, smoking, exercise, diet, information from an electronic medical record, self-assessment data, medical image(s), sound(s) from: heartbeat, breathing noise, cough, swallow, sneeze, clear throat, scratch, voice, noises when knocking against part(s) of the body and/or joint noise.

3. The method according to any one of claims 1 to 2, wherein the machine learning model comprises a number $k$ of input layers, and a number k+1 output layers, wherein $k$ is a natural number greater than two, and wherein each input layer is configured to receive input data of a different modality.

4. The method according to any one of claim 1 to 3, wherein the machine learning model is or comprises a deep neural network, wherein the deep neural network comprises, at least for the training, a first encoder ($e^1$), a first decoder ($d^1$), a second encoder ($e^2$), a second decoder ($d^2$), a fusion component ($f$), an attention weighted pooling ($a$), and a projection head ($p$),

- wherein the first encoder ($e^1$) is configured to receive first masked input data ( $\widetilde{X}_i^1, \overline{\overline{X}}_i^1$ ), and to generate a first representation from the first masked input data ( $\widetilde{X}_i^1, \overline{\overline{X}}_i^1$ ),
- wherein the second encoder ($e^2$) is configured to receive second masked input data ( $\widetilde{X}_i^2, \overline{\overline{X}}_i^2$ ), and to generate a second representation from the second masked input data ( $\widetilde{X}_i^2, \overline{\overline{X}}_i^2$ ),
- wherein the fusion component ($f$) is configured to generate a joint representation from the first representation and the second representation,
- wherein the first decoder ($d^1$) is configured to reconstruct the first augmented input data ( $\widehat{X}_i^1, \overline{X}_i^1$ ) from the joint representation,
- wherein the second decoder is configured to reconstruct the second augmented input data ( $\widehat{X}_i^2, \overline{X}_i^2$ ) from the joint representation,
- wherein the attention weighted pooling ($a$) is configured to reduce the dimensions of the joint representation,
- wherein the projection head (p) is configured to map the dimensionally reduced joint representation to a space where contrastive loss is applied.

5. The method according to any one of claim 1 to 4, wherein the training further comprises:

- computing a reconstruction loss for each reconstruction task,
- computing a contrastive loss for each discrimination task,
- computing a total loss on the basis of the reconstruction losses and the discrimination losses,
- modifying parameters of the machine learning model so that the total loss is minimized.

6. The method according to any one of claim 1 to 5, wherein, for each second object of a plurality of second objects, a similarity value is computed, the similarity value quantifying the similarity between a second representation of the second object and the first representation of the first object, wherein a number $m$ of second objects is identified, the similarity values of the number $m$ of second objects being greater than the similarity values of second objects not belonging to the number $m$ of second objects, wherein $m$ is a natural number greater than 0.

7. The method according to claim 6, wherein, for each second object of the number $m$ of second objects, input data related to the second object is analyzed in order to identify data characterizing the second object that is not available for the first object.

8. A computer system comprising:

a processor (20); and
a memory (50) storing an application program (60) configured to perform, when executed by the processor (20), an operation, the operation comprising:

- receiving input data related to a first object,
- inputting the input data into a trained machine learning model,
- receiving from the trained machine learning model a first representation of the first object,
- receiving at least one second representation of at least one second object,
- computing a similarity value, the similarity value indicating the similarity between the first representation and the at least one second representation,
- outputting the similarity value,

wherein the trained machine learning model was trained in a training process, the training process comprising the following steps:

- providing a machine learning model, the machine learning model comprising:

  • a first input layer ($I^1$),
  • a second input layer ($I^2$),
  • a first output layer ($O^1$),
  • a second output layer ($O^2$), and
  • a third output layer ($O^3$),

- receiving training data for training the machine learning model, wherein providing training data comprises:

  • receiving, for each object (i) of a multitude of objects (a, b, c), input data of at least two different modalities, first input data ( $X_i^1$ ) of a first modality and second input data ( $X_i^2$ ) of a second modality.
  • generating first augmented input data ( $\widehat{X}_i^1, \overline{X}_i^1$ ) from the first input data ( $X_i^1$ ) and second augmented input data ( $\widehat{X}_i^2, \overline{X}_i^2$ ) from the second input data ( $X_i^2$ ),
  • generating first masked input data ( $\widetilde{X}_i^1, \overline{\overline{X}}_i^1$ ) from the first augmented input data ( $\widehat{X}_i^1, \overline{X}_i^1$ ) and second masked input data ( $\widetilde{X}_i^2, \overline{\overline{X}}_i^2$ ) from the second augmented input data ( $\widehat{X}_i^2, \overline{X}_i^2$ ),

- training the machine learning model to perform a combined reconstruction and discrimination task, the training comprising:

  • inputting the first masked input data ( $\widetilde{X}_i^1, \overline{\overline{X}}_i^1$ ) into the first input layer ($I^1$),
  • inputting the second masked input data ( $\widetilde{X}_i^2, \overline{\overline{X}}_i^2$ ) into the second input layer ($I^2$),
  • reconstructing the first augmented input data ( $\widehat{X}_i^1, \overline{X}_i^1$ ) from the first masked input data ( $\widetilde{X}_i^1, \overline{\overline{X}}_i^1$ ) via the

first output layer ($O^1$),

• reconstructing the second augmented input data ( $\widehat{X}_i^2$, $\overline{X}_i^2$ ) from the second masked input ( $\widetilde{X}_i^2$ ) data via the second output layer ($O^2$),

• generating a joint representation ($Z_i$) of the first masked input data ( $\widetilde{X}_i^1$, $\overline{\overline{X}}_i^1$ ) and the second masked input data ( $\widetilde{X}_i^2$, $\overline{\overline{X}}_i^2$ ) via the third output layer ($O^3$), and

• discriminating joint representations which were generated from input data of the same object from joint contrastive representations which were generated from input data of different objects

- wherein the first object, the at least one second object and each object of the multitude of objects is a human being, preferably a patient,
- wherein the first object is different from the at least one second object, or the first object is identical to the at least one second object, and the first representation is a representation of the first object at a first point in time and the at least one second representation represents the first object at least one second point in time,
- wherein the first input data ( $X_i^1$ ) of the first modality comprises one or more images and the second input data ( $X_i^2$ ) of the second modality comprises or is derived from text files and/or audio files.

9. A non-transitory computer readable medium having stored thereon software instructions that, when executed by a processor (20) of a computer system (1), cause the computer system (20) to execute the following steps:

- receiving input data related to a first object,
- inputting the input data into a trained machine learning model,
- receiving from the trained machine learning model a first representation of the first object,
- computing a similarity value, the similarity value indicating the similarity between the first representation and at least one second representation of at least one second object,
- outputting the similarity value,

wherein the trained machine learning model was trained in a training process, the training process comprising the following steps:

- providing a machine learning model, the machine learning model comprising:

• a first input layer ($I^1$),
• a second input layer ($I^2$),
• a first output layer ($O^1$),
• a second output layer ($O^2$), and
• a third output layer ($O^3$),

- providing training data for training the machine learning model, wherein providing training data comprises:

• receiving, for each object (i) of a multitude of objects (a, b, c), input data of at least two different modalities, first input data ( $X_i^1$ ) of a first modality and second input data ( $X_i^2$ ) of a second modality.
• generating first augmented input data ( $\widehat{X}_i^1$, $\overline{X}_i^1$ ) from the first input data ( $X_i^1$ ) and second augmented input data ( $\widehat{X}_i^2$, $\overline{X}_i^2$ ) from the second input data ( $X_i^2$ ),
• generating first masked input data ( $\widetilde{X}_i^1$, $\overline{\overline{X}}_i^1$ ) from the first augmented input data ( $\widehat{X}_i^1$, $\overline{X}_i^1$ ) and second masked input data ( $\widetilde{X}_i^2$, $\overline{\overline{X}}_i^2$ ) from the second augmented input data ( $\widehat{X}_i^2$, $\overline{X}_i^2$ ),

- training the machine learning model to perform a combined reconstruction and discrimination task, the training comprising:

• inputting the first masked input data ( $\widetilde{X}_i^1$, $\overline{\overline{X}}_i^1$ ) into the first input layer ($I^1$),
• inputting the second masked input data ( $\widetilde{X}_i^2$, $\overline{\overline{X}}_i^2$ ) into the second input layer ($I^2$),
• reconstructing the first augmented input data ( $\widehat{X}_i^1$, $\overline{X}_i^1$ ) from the first masked input data ( $\widetilde{X}_i^1$, $\overline{\overline{X}}_i^1$ ) via the first output layer ($O^1$),
• reconstructing the second augmented input data ( $\widehat{X}_i^2$, $\overline{X}_i^2$ ) from the second masked input data ( $\widetilde{X}_i^2$, $\overline{\overline{X}}_i^2$ ) via the sec-

ond output layer (O$^2$),
• generating a joint representation ($Z_i$) of the first masked input data ( $\widetilde{X}_i^1, \overline{\overline{X}}_i^1$ ) and the second masked input data ( $\widetilde{X}_i^2, \overline{\overline{X}}_i^2$ ) via the third output layer (O$^3$), and
• discriminating joint representations which were generated from input data of the same object from joint contrastive representations which were generated from input data of different objects,

- wherein the first object, the at least one second object and each object of the multitude of objects is a human being, preferably a patient,
- wherein the first object is different from the at least one second object, or
the first object is identical to the at least one second object, and the first representation is a representation of the first object at a first point in time and the at least one second representation represents the first object at least one second point in time,

- wherein the first input data ( $X_i^1$ ) of the first modality comprises one or more images and the second input data ( $X_i^2$ ) of the second modality comprises or is derived from text files and/or audio files.

**Patentansprüche**

1. Computerimplementiertes Verfahren, wobei das Verfahren Folgendes umfasst:

- Bereitstellen eines Modells für maschinelles Lernen, wobei das Modell für maschinelles Lernen Folgendes umfasst:

• eine erste Eingabeschicht (I$^1$),
• eine zweite Eingabeschicht (I$^2$),
• eine erste Ausgabeschicht (O$^1$),
• eine zweite Ausgabeschicht (O$^2$), und
• eine dritte Ausgabeschicht (O$^3$),

- Bereitstellen von Trainingsdaten zum Trainieren des Modells für maschinelles Lernen, wobei das Bereitstellen von Trainingsdaten Folgendes umfasst:

• Empfangen von Eingabedaten von mindestens zwei verschiedenen Modalitäten, ersten Eingabedaten ( $X_i^1$ ) einer ersten Modalität und zweiten Eingabedaten ( $X_i^2$ ) einer zweiten Modalität, für jedes Objekt (i) einer Vielzahl von Objekten (a, b, c),
• Erzeugen erster erweiterter Eingabedaten ( $\widehat{X}_i^1, \overline{X}_i^1$ ) aus den ersten Eingabedaten ( $X_i^1$ ) und zweiter erweiterter Eingabedaten ( $\widehat{X}_i^2, \overline{X}_i^2$ ) aus den zweiten Eingabedaten ( $X_i^2$ ),
• Erzeugen erster maskierter Eingabedaten ( $\widetilde{X}_i^1, \overline{\overline{X}}_i^1$ ) aus den ersten erweiterten Eingabedaten ( $\widehat{X}_i^1, \overline{X}_i^1$ ) und zweiter maskierter Eingabedaten ( $\widetilde{X}_i^2, \overline{\overline{X}}_i^2$ ) aus den zweiten erweiterten Eingabedaten ( $\widehat{X}_i^2, \overline{X}_i^2$ ),

- Trainieren des Modells für maschinelles Lernen, um eine kombinierte Rekonstruktions- und Diskriminationsaufgabe auszuführen, wobei das Training Folgendes umfasst:

• Eingeben der ersten maskierten Eingabedaten ( $\widetilde{X}_i^1, \overline{\overline{X}}_i^1$ ) in die erste Eingabeschicht (I$^1$),
• Eingeben der zweiten maskierten Eingabedaten ( $\widetilde{X}_i^2, \overline{\overline{X}}_i^2$ ) in die zweite Eingabeschicht (I$^2$),
• Rekonstruieren der ersten erweiterten Eingabedaten ( $\widehat{X}_i^1, \overline{X}_i^1$ ) aus den ersten maskierten Eingabedaten ( $\widetilde{X}_i^1, \overline{\overline{X}}_i^1$ ) über die erste Ausgabeschicht (O$^1$),
• Rekonstruieren der zweiten erweiterten Eingabedaten ( $\widehat{X}_i^2, \overline{X}_i^2$ ) aus den zweiten maskierten Eingabedaten ( $\widetilde{X}_i^2, \overline{\overline{X}}_i^2$ ) über die zweite Ausgabeschicht (O$^2$),
• Erzeugen einer gemeinsamen Darstellung ($Z_i$) der ersten maskierten Eingabedaten ( $\widetilde{X}_i^1, \overline{\overline{X}}_i^1$ ) und der zweiten maskierten Eingabedaten ( $\widetilde{X}_i^2, \overline{\overline{X}}_i^2$ ) über die dritte Ausgabeschicht (O$^3$), und
• Unterscheiden gemeinsamer Darstellungen, die aus Eingabedaten desselben Objekts erzeugt wurden, von gemeinsamen kontrastiven Darstellungen, die aus Eingabedaten verschiedener Objekte erzeugt wurden,

- Empfangen von Eingabedaten in Bezug auf ein erstes Objekt,

- Eingeben der Eingabedaten in Bezug auf das erste Objekt in das trainierte Modell für maschinelles Lernen,
- Empfangen einer ersten Darstellung des ersten Objekts von dem trainierten Modell für maschinelles Lernen über die dritte Ausgabeschicht ($O^3$),
- Empfangen mindestens einer zweiten Darstellung mindestens eines zweiten Objekts,
- Berechnen eines Ähnlichkeitswerts, wobei der Ähnlichkeitswert die Ähnlichkeit zwischen der ersten Darstellung und der mindestens einen zweiten Darstellung angibt,
- Ausgeben des Ähnlichkeitswerts,

wobei das erste Objekt, das mindestens eine zweite Objekt und jedes Objekt der Vielzahl von Objekten ein Mensch, vorzugsweise ein Patient, ist,

wobei sich das erste Objekt von dem mindestens einen zweiten Objekt unterscheidet oder das erste Objekt mit dem mindestens einen zweiten Objekt identisch ist und die erste Darstellung eine Darstellung des ersten Objekts zu einem ersten Zeitpunkt ist und die mindestens eine zweite Darstellung das erste Objekt zu mindestens einem zweiten Zeitpunkt darstellt;

wobei die ersten Eingabedaten ( $X_i^1$ ) der ersten Modalität ein oder mehrere Bilder umfassen und die zweiten Eingabedaten ( $X_i^2$ ) der zweiten Modalität Textdateien und/oder Audiodateien umfassen oder daraus abgeleitet sind.

2. Verfahren nach Anspruch 1, wobei die Trainingsdaten und die Eingabedaten in Bezug auf das erste Objekt personenbezogene Daten umfassen, wobei die personenbezogenen Daten aus einem oder mehreren der folgenden Gruppe ausgewählt werden: Alter, Größe, Gewicht, Geschlecht, Augenfarbe, Haarfarbe, Hautfarbe, Blutgruppe, Blutdruck, Ruhepuls, Herzfrequenzvariabilität, Vagustonus, Hämatokrit, Zuckerkonzentration im Urin, bestehenden Erkrankungen, bestehenden Beschwerden, Vorerkrankungen, früheren Beschwerden, Sehvermögen, Alkoholkonsum, Rauchen, Bewegung, Ernährung, Informationen aus einer elektronischen Patientenakte, Selbsteinschätzungsdaten, medizinischen Bild(ern), Geräusch(en) aus: Herzschlag, Atemgeräuschen, Husten, Schlucken, Niesen, Räuspern, Kratzen, Stimme, Geräuschen beim Klopfen gegen Körperteile und/oder Gelenkgeräuschen.

3. Verfahren nach einem der Ansprüche 1 bis 2, wobei das Modell für maschinelles Lernen eine Anzahl k von Eingabeschichten und eine Anzahl k + 1 Ausgabeschichten umfasst, wobei k eine natürliche Zahl größer als zwei ist, und wobei jede Eingabeschicht dazu ausgelegt ist, Eingabedaten einer anderen Modalität zu empfangen.

4. Verfahren nach einem der Ansprüche 1 bis 3, wobei das Modell für maschinelles Lernen ein tiefes neuronales Netzwerk ist oder umfasst, wobei das tiefe neuronale Netzwerk zumindest für das Training einen ersten Codierer ($e^1$), einen ersten Decodierer ($d^1$), einen zweiten Codierer ($e^2$), einen zweiten Decodierer ($d^2$), eine Fusionskomponente (f), ein aufmerksamkeitsgewichtetes Pooling (a) und einen Projektionskopf (p) umfasst,

- wobei der erste Codierer ($e^1$) dazu ausgelegt ist, erste maskierte Eingabedaten ( $\widetilde{X}_i^1, \overline{\overline{X}}_i^1$ ) zu empfangen und eine erste Darstellung aus den ersten maskierten Eingabedaten ( $\widetilde{X}_i^1, \overline{\overline{X}}_i^1$ ) zu erzeugen,
- wobei der zweite Codierer ($e^2$) dazu ausgelegt ist, zweite maskierte Eingabedaten ( $\widetilde{X}_i^2, \overline{\overline{X}}_i^2$ ) zu empfangen und eine zweite Darstellung aus den zweiten maskierten Eingabedaten ( $\widetilde{X}_i^2, \overline{\overline{X}}_i^2$ ) zu erzeugen,
- wobei die Fusionskomponente (f) dazu ausgelegt ist, eine gemeinsame Darstellung aus der ersten Darstellung und der zweiten Darstellung zu erzeugen,
- wobei der erste Decodierer ($d^1$) dazu ausgelegt ist, die ersten erweiterten Eingabedaten ( $\widehat{X}_i^1, \overline{X}_i^1$ ) aus der gemeinsamen Darstellung zu rekonstruieren,
- wobei der zweite Decodierer dazu ausgelegt ist, die zweiten erweiterten Eingabedaten ( $\widehat{X}_i^2, \overline{X}_i^2$ ) aus der gemeinsamen Darstellung zu rekonstruieren,
- wobei das aufmerksamkeitsgewichtete Pooling (a) dazu ausgelegt ist, die Abmessungen der gemeinsamen Darstellung zu reduzieren,
- wobei der Projektionskopf (p) dazu ausgelegt ist, die dimensionsreduzierte gemeinsame Darstellung auf einen Raum abzubilden, in dem kontrastiver Verlust angewendet wird.

5. Verfahren nach einem der Ansprüche 1 bis 4, wobei das Training ferner umfasst:

- Berechnen eines Rekonstruktionsverlusts für jede Rekonstruktionsaufgabe;
- Berechnen eines kontrastiven Verlusts für jede Diskriminationsaufgabe;

- Berechnen eines Gesamtverlustes auf der Basis der Rekonstruktionsverluste und der Diskriminationsverluste;
- Modifizieren von Parametern des Modells für maschinelles Lernen, so dass der Gesamtverlust minimiert wird.

6. Verfahren nach einem der Ansprüche 1 bis 5, wobei für jedes zweite Objekt einer Mehrzahl von zweiten Objekten ein Ähnlichkeitswert berechnet wird, wobei der Ähnlichkeitswert die Ähnlichkeit zwischen einer zweiten Darstellung des zweiten Objekts und der ersten Darstellung des ersten Objekts quantifiziert, wobei eine Anzahl m zweiter Objekte identifiziert wird, wobei die Ähnlichkeitswerte der Anzahl m zweiter Objekte größer sind als die Ähnlichkeitswerte zweiter Objekte, die nicht zu der Anzahl m zweiter Objekte gehören, wobei m eine natürliche Zahl größer als 0 ist.

7. Verfahren nach Anspruch 6, wobei für jedes zweite Objekt der Anzahl m zweiter Objekte Eingabedaten in Bezug auf das zweite Objekt analysiert werden, um Daten zu identifizieren, die das zweite Objekt charakterisieren und die für das erste Objekt nicht verfügbar sind.

8. Computersystem, umfassend:

einen Prozessor (20); und
einen Speicher (50), der ein Anwendungsprogramm (60) speichert, das dazu ausgelegt ist, bei Ausführung durch den Prozessor (20) eine Operation auszuführen, wobei die Operation Folgendes umfasst:

- Empfangen von Eingabedaten in Bezug auf ein erstes Objekt,
- Eingeben der Eingabedaten in ein trainiertes Modell für maschinelles Lernen,
- Empfangen einer ersten Darstellung des ersten Objekts von dem trainierten Modell für maschinelles Lernen,
- Empfangen mindestens einer zweiten Darstellung mindestens eines zweiten Objekts,
- Berechnen eines Ähnlichkeitswerts, wobei der Ähnlichkeitswert die Ähnlichkeit zwischen der ersten Darstellung und der mindestens einen zweiten Darstellung angibt,
- Ausgeben des Ähnlichkeitswerts,

wobei das trainierte Modell für maschinelles Lernen in einem Trainingsprozess trainiert wurde, wobei der Trainingsprozess die folgenden Schritte umfasst:

- Bereitstellen eines Modells für maschinelles Lernen, wobei das Modell für maschinelles Lernen Folgendes umfasst:

- eine erste Eingabeschicht ($I^1$),
- eine zweite Eingabeschicht ($I^2$),
- eine erste Ausgabeschicht ($O^1$),
- eine zweite Ausgabeschicht ($O^2$), und
- eine dritte Ausgabeschicht ($O^3$),

- Empfangen von Trainingsdaten zum Trainieren des Modells für maschinelles Lernen, wobei das Bereitstellen von Trainingsdaten Folgendes umfasst:

- Empfangen von Eingabedaten von mindestens zwei verschiedenen Modalitäten, ersten Eingabedaten ($X_i^1$) einer ersten Modalität und zweiten Eingabedaten ($X_i^2$) einer zweiten Modalität, für jedes Objekt (i) einer Vielzahl von Objekten (a, b, c),
- Erzeugen erster erweiterter Eingabedaten ($\widehat{X}_i^1, \overline{X}_i^1$) aus den ersten Eingabedaten ($X_i^1$) und zweiter erweiterter Eingabedaten ($\widehat{X}_i^2, \overline{X}_i^2$) aus den zweiten Eingabedaten ($X_i^2$),
- Erzeugen erster maskierter Eingabedaten ($\widetilde{X}_i^1, \overline{\overline{X}}_i^1$) aus den ersten erweiterten Eingabedaten ($\widehat{X}_i^1, \overline{X}_i^1$) und zweiter maskierter Eingabedaten ($\widetilde{X}_i^2, \overline{\overline{X}}_i^2$) aus den zweiten erweiterten Eingabedaten ($\widehat{X}_i^2, \overline{X}_i^2$),

- Trainieren des Modells für maschinelles Lernen, um eine kombinierte Rekonstruktions- und Diskriminationsaufgabe auszuführen, wobei das Training Folgendes umfasst:

- Eingeben der ersten maskierten Eingabedaten ($\widetilde{X}_i^1, \overline{\overline{X}}_i^1$) in die erste Eingabeschicht ($I^1$),
- Eingeben der zweiten maskierten Eingabedaten ($\widetilde{X}_i^2, \overline{\overline{X}}_i^2$) in die zweite Eingabeschicht ($I^2$),
- Rekonstruieren der ersten erweiter-

ten Eingabedaten ( $\widehat{X}_i^1, \overline{X}_i^1$ ) aus den ersten maskierten Eingabedaten ( $\widetilde{X}_i^1, \overline{\overline{X}}_i^1$ ) über die erste Ausgabeschicht ($O^1$),

• Rekonstruieren der zweiten erweiterten Eingabedaten ( $\widehat{X}_i^2, \overline{X}_i^2$ ) aus den zweiten maskierten Eingabedaten ( $\widetilde{X}_i^2$ ) über die zweite Ausgabeschicht ($O^2$),

• Erzeugen einer gemeinsamen Darstellung ($Z_i$) der ersten maskierten Eingabedaten ( $\widetilde{X}_i^1, \overline{\overline{X}}_i^1$ ) und der zweiten maskierten Eingabedaten ( $\widetilde{X}_i^2, \overline{\overline{X}}_i^2$ ) über die dritte Ausgabeschicht ($O^3$), und

• Unterscheiden von gemeinsamen Darstellungen, die aus Eingabedaten desselben Objekts erzeugt wurden, von gemeinsamen kontrastiven Darstellungen, die aus Eingabedaten verschiedener Objekte erzeugt wurden,

- wobei das erste Objekt, das mindestens eine zweite Objekt und jedes Objekt der Vielzahl von Objekten ein Mensch, vorzugsweise ein Patient, ist,
- wobei sich das erste Objekt von dem mindestens einen zweiten Objekt unterscheidet oder

das erste Objekt mit dem mindestens einen zweiten Objekt identisch ist und die erste Darstellung eine Darstellung des ersten Objekts zu einem ersten Zeitpunkt ist und die mindestens eine zweite Darstellung das erste Objekt zu mindestens einem zweiten Zeitpunkt darstellt;

- wobei die ersten Eingabedaten ( $X_i^1$ ) der ersten Modalität ein oder mehrere Bilder umfassen und die zweiten Eingabedaten ( $X_i^2$ ) der zweiten Modalität Textdateien und/oder Audiodateien umfassen oder daraus abgeleitet sind.

9. Nichtflüchtiges, computerlesbares Medium, auf dem Softwareanweisungen gespeichert sind, die bei Ausführung durch einen Prozessor (20) eines Computersystems (1) das Computersystem (20) veranlassen, die folgenden Schritte auszuführen:

- Empfangen von Eingabedaten in Bezug auf ein erstes Objekt,
- Eingeben der Eingabedaten in ein trainiertes Modell für maschinelles Lernen,
- Empfangen einer ersten Darstellung des ersten Objekts von dem trainierten Modell für maschinelles Lernen,
- Berechnen eines Ähnlichkeitswerts, wobei der Ähnlichkeitswert die Ähnlichkeit zwischen der ersten Darstellung und mindestens einer zweiten Darstellung mindestens eines zweiten Objekts angibt,
- Ausgeben des Ähnlichkeitswerts,
wobei das trainierte Modell für maschinelles Lernen in einem Trainingsprozess trainiert wurde, wobei der Trainingsprozess die folgenden Schritte umfasst:

- Bereitstellen eines Modells für maschinelles Lernen, wobei das Modell für maschinelles Lernen Folgendes umfasst:

• eine erste Eingabeschicht ($I^1$),
• eine zweite Eingabeschicht ($I^2$),
• eine erste Ausgabeschicht ($O^1$),
• eine zweite Ausgabeschicht ($O^2$), und
• eine dritte Ausgabeschicht ($O^3$),

- Bereitstellen von Trainingsdaten zum Trainieren des Modells für maschinelles Lernen, wobei das Bereitstellen von Trainingsdaten Folgendes umfasst:

• Empfangen von Eingabedaten von mindestens zwei verschiedenen Modalitäten, ersten Eingabedaten ( $X_i^1$ ) einer ersten Modalität und zweiten Eingabedaten ( $X_i^2$ ) einer zweiten Modalität, für jedes Objekt (i) einer Vielzahl von Objekten (a, b, c),
• Erzeugen erster erweiterter Eingabedaten ( $\widehat{X}_i^1, \overline{X}_i^1$ ) aus den ersten Eingabedaten ( $X_i^1$ ) und zweiter erweiterter Eingabedaten ( $\widehat{X}_i^2, \overline{X}_i^2$ ) aus den zweiten Eingabedaten ( $X_i^2$ ),
• Erzeugen erster maskierter Eingabedaten ( $\widetilde{X}_i^1, \overline{\overline{X}}_i^1$ ) aus den ersten erweiterten Eingabedaten ( $\widehat{X}_i^1, \overline{X}_i^1$ ) und zweiter maskierter Eingabedaten ( $\widetilde{X}_i^2, \overline{\overline{X}}_i^2$ ) aus den zweiten erweiterten Eingabedaten ( $\widehat{X}_i^2, \overline{X}_i^2$ ),

- Trainieren des Modells für maschinelles Lernen, um eine kombinierte Rekonstruktions- und Diskriminationsaufgabe auszuführen, wobei das Training Folgendes umfasst:

 • Eingeben der ersten maskierten Eingabedaten ( $\widetilde{X}_i^1, \overline{\overline{X}}_i^1$ ) in die erste Eingabeschicht (I[1]),
 • Eingeben der zweiten maskierten Eingabedaten ( $\widetilde{X}_i^2, \overline{\overline{X}}_i^2$ ) in die zweite Eingabeschicht (I[2]),
 • Rekonstruieren der ersten erweiterten Eingabedaten ( $\widehat{X}_i^1, \overline{X}_i^1$ ) aus den ersten maskierten Eingabedaten ( $\widetilde{X}_i^1, \overline{\overline{X}}_i^1$ ) über die erste Ausgabeschicht (O[1]),
 • Rekonstruieren der zweiten erweiterten Eingabedaten ( $\widehat{X}_i^2, \overline{X}_i^2$ ) aus den zweiten maskierten Eingabedaten ( $\widetilde{X}_i^2, \overline{\overline{X}}_i^2$ ) über die zweite Ausgabeschicht (O[2]),
 • Erzeugen einer gemeinsamen Darstellung ($Z_i$) der ersten maskierten Eingabedaten ( $\widetilde{X}_i^1, \overline{\overline{X}}_i^1$ ) und der zweiten maskierten Eingabedaten ( $\widetilde{X}_i^2, \overline{\overline{X}}_i^2$ ) über die dritte Ausgabeschicht (O[3]), und
 • Unterscheiden gemeinsamer Darstellungen, die aus Eingabedaten desselben Objekts erzeugt wurden, von gemeinsamen kontrastiven Darstellungen, die aus Eingabedaten verschiedener Objekte erzeugt wurden,

- wobei das erste Objekt, das mindestens eine zweite Objekt und jedes Objekt der Vielzahl von Objekten ein Mensch, vorzugsweise ein Patient, ist,
- wobei sich das erste Objekt von dem mindestens einen zweiten Objekt unterscheidet oder

das erste Objekt mit dem mindestens einen zweiten Objekt identisch ist und die erste Darstellung eine Darstellung des ersten Objekts zu einem ersten Zeitpunkt ist und die mindestens eine zweite Darstellung das erste Objekt zu mindestens einem zweiten Zeitpunkt darstellt;

- wobei die ersten Eingabedaten ( $X_i^1$ ) der ersten Modalität ein oder mehrere Bilder umfassen und die zweiten Eingabedaten ( $X_i^2$ ) der zweiten Modalität Textdateien und/oder Audiodateien umfassen oder daraus abgeleitet sind.

**Revendications**

1. Procédé mis en œuvre par ordinateur, le procédé comprenant les étapes suivantes :

 - fournir un modèle d'apprentissage automatique, le modèle d'apprentissage automatique comprenant :

  • une première couche d'entrée (I[1]),
  • une deuxième couche d'entrée (I[2]),
  • une première couche de sortie (O[1]),
  • une deuxième couche de sortie (O[2]), et
  • une troisième couche de sortie (O[3]),

 - fournir des données d'entraînement pour entraîner le modèle d'apprentissage automatique, où la fourniture de données d'entraînement comprend les étapes suivantes :

  • recevoir, pour chaque objet (i) d'une multitude d'objets (a, b, c), des données d'entrée d'au moins deux modalités différentes, des premières données d'entrée ( $X_i^1$ ) d'une première modalité et des deuxièmes données d'entrée ( $X_i^2$ ) d'une deuxième modalité,
  • générer des premières données d'entrée augmentées ( $\widehat{X}_i^1, \overline{X}_i^1$ ) à partir des premières données ( $X_i^1$ ) d'entrée et des deuxièmes données d'entrée augmentées ( $\widehat{X}_i^2, \overline{X}_i^2$ ) à partir des deuxièmes données d'entrée ( $X_i^2$ ),
  • générer des premières données d'entrée masquées ( $\widetilde{X}_i^1, \overline{\overline{X}}_i^1$ ) à partir des premières données d'entrée augmentées ( $\widehat{X}_i^1, \overline{X}_i^1$ ) et des deuxièmes données d'entrée masquées ( $\widetilde{X}_i^2, \overline{\overline{X}}_i^2$ ) à partir des deuxièmes données d'entrée augmentées ( $\widehat{X}_i^2, \overline{X}_i^2$ ),

- entraîner le modèle d'apprentissage automatique pour effectuer une tâche combinée de reconstruction et de discrimination, l'entraînement comprenant les étapes suivantes :

• entrer les premières données d'entrée masquées ( $\widetilde{X}_i^1, \overline{\overline{X}}_i^1$ ) dans la première couche d'entrée ($I^1$),

• entrer les deuxièmes données d'entrée masquées ( $\widetilde{X}_i^2, \overline{\overline{X}}_i^2$ ) dans la deuxième couche d'entrée ($I^2$),

• reconstruire les premières données d'entrée augmentées ( $\widehat{X}_i^1, \overline{X}_i^1$ ) à partir des premières données d'entrée masquées ( $\widetilde{X}_i^1, \overline{\overline{X}}_i^1$ ) par l'intermédiaire de la première couche de sortie ($O^1$),

• reconstruire les deuxièmes données d'entrée augmentées ( $\widehat{X}_i^2, \overline{X}_i^2$ ) à partir des deuxièmes données d'entrée masquées ( $\widetilde{X}_i^2, \overline{\overline{X}}_i^2$ ) par l'intermédiaire de la deuxième couche de sortie ($O^2$),

• générer une représentation conjointe ($Z_i$) des premières données d'entrée masquées ( $\widetilde{X}_i^1, \overline{\overline{X}}_i^1$ ) et des deuxièmes données d'entrée masquées ( $\widetilde{X}_i^2, \overline{\overline{X}}_i^2$ ) par l'intermédiaire de la troisième couche de sortie ($O^3$), et

• discriminer les représentations conjointes qui ont été générées à partir de données d'entrée du même objet à partir de représentations contrastives conjointes qui ont été générées à partir de données d'entrée de différents objets,

- recevoir des données d'entrée relatives à un premier objet,
- entrer les données d'entrée liées au premier objet dans le modèle d'apprentissage automatique entrainé,
- recevoir du modèle d'apprentissage automatique entraîné une première représentation du premier objet par l'intermédiaire de la troisième couche de sortie ($O^3$),
- recevoir au moins une deuxième représentation d'au moins un deuxième objet,
- calculer une valeur de similitude, la valeur de similitude indiquant la similitude entre la première représentation et l'au moins une deuxième représentation,
- délivrer en sortie la valeur de similitude, où le premier objet, l'au moins un deuxième objet et chaque objet de la multitude d'objets est un être humain, de préférence un patient, où le premier objet est différent de l'au moins un deuxième objet, ou le premier objet est identique à l'au moins un deuxième objet, et la première représentation est une représentation du premier objet à un premier moment et l'au moins une deuxième représentation représente le premier objet au moins un deuxième moment ; où les premières données d'entrée ( $X_i^1$ ) de la première modalité comprennent une ou plusieurs images et les deuxièmes données d'entrée ( $X_i^2$ ) de la deuxième modalité comprennent ou sont dérivées de fichiers texte et/ou de fichiers audio.

2. Procédé selon la revendication 1, dans lequel les données d'entraînement et les données d'entrée relatives au premier objet comprennent des données personnelles, les données personnelles étant sélectionnées parmi une ou plusieurs données du groupe suivant : âge, taille, poids, sexe, couleur des yeux, couleur des cheveux, couleur de la peau, groupe sanguin, pression artérielle, fréquence cardiaque au repos, variabilité de la fréquence cardiaque, tonus nerveux vague, hématocrite, concentration de sucre dans l'urine, maladies existantes, conditions existantes, maladies préexistantes, conditions préexistantes, vue, consommation d'alcool, tabagisme, exercice, régime alimentaire, informations provenant d'un dossier médical électronique, données d'auto-évaluation, images médicales, sons provenant de : des battements cardiaques, de la respiration, toux, déglutition, éternuement, gorge claire, égratignure, voix, bruits lors d'un cognement contre une ou plusieurs parties du corps et/ou du bruit articulaire.

3. Procédé selon l'une quelconque des revendications 1 et 2, dans lequel le modèle d'apprentissage automatique comprend un nombre k de couches d'entrée, et un nombre k+1 couches de sortie, où k est un nombre naturel supérieur à deux, et où chaque couche d'entrée est configurée pour recevoir des données d'entrée d'une modalité différente.

4. Procédé selon l'une quelconque des revendications 1 à 3, dans lequel le modèle d'apprentissage automatique est ou comprend un réseau de neurones profond, où le réseau de neurones profond comprend, au moins pour l'entraînement, un premier codeur ($e^1$), un premier décodeur ($d^1$), un deuxième codeur ($e^2$), un deuxième décodeur ($d^2$), une composante de fusion (f), un regroupement pondéré de l'attention (a), et une tête de projection (p),

- où le premier encodeur ($e^1$) est configuré pour

recevoir des premières données d'entrée masquées ( $\widetilde{X}_i^1, \overline{\overline{X}}_i^1$ ), et pour générer une première représentation à partir des premières données d'entrée masquées ( $\widetilde{X}_i^1, \overline{\overline{X}}_i^1$ ),

- où le deuxième encodeur ($e^2$) est configuré pour recevoir des deuxièmes données d'entrée masquées ( $\widetilde{X}_i^2, \overline{\overline{X}}_i^2$ ), et pour générer une deuxième représentation à partir des deuxièmes données d'entrée masquées ( $\widetilde{X}_i^2, \overline{\overline{X}}_i^2$ ),

- où la composante de fusion (f) est configurée pour générer une représentation conjointe à partir de la première représentation et de la deuxième représentation,

- où le premier décodeur ($d^1$) est configuré pour reconstruire les premières données d'entrée augmentées ( $\widehat{X}_i^1, \overline{X}_i^1$ ) à partir de la représentation conjointe,

- où le deuxième décodeur est configuré pour reconstruire les deuxièmes données d'entrée augmentées ( $\widehat{X}_i^2, \overline{X}_i^2$ ) à partir de la représentation conjointe,

- où le regroupement pondéré de l'attention (a) est configuré pour réduire les dimensions de la représentation conjointe,

- où la tête de projection (p) est configurée pour mapper la représentation conjointe aux dimensions réduites à un espace où la perte contrastive est appliquée.

5. Procédé selon l'une quelconque des revendications 1 à 4, l'entraînement comprenant en outre les étapes suivantes :

    - calculer une perte de reconstruction pour chaque tâche de reconstruction,
    - calculer une perte contrastive pour chaque tâche de discrimination,
    - calculer une perte totale sur la base des pertes de reconstruction et des pertes de discrimination,
    - modifier les paramètres du modèle d'apprentissage automatique de manière à ce que la perte totale soit minimisée.

6. Procédé selon l'une quelconque des revendications 1 à 5, dans lequel, pour chaque deuxième objet d'une pluralité de deuxièmes objets, une valeur de similitude est calculée, la valeur de similitude quantifiant la similitude entre une deuxième représentation du deuxième objet et la première représentation du premier objet, où un nombre m de deuxièmes objets est identifié, les valeurs de similitude du nombre m de deuxièmes objets étant supérieures aux valeurs de similitudes de deuxièmes objets n'appartenant pas au nombre m de deuxièmes objets, où m est un entier naturel supérieur à 0.

7. Procédé selon la revendication 6, dans lequel, pour chaque deuxième objet du nombre m de deuxièmes objets, des données d'entrée liées au deuxième objet sont analysées afin d'identifier des données caractérisant le deuxième objet qui ne sont pas disponibles pour le premier objet.

8. Système informatique comprenant :

    un processeur (20) ; et
    une mémoire (50) stockant un programme (60) d'application configuré pour effectuer, lorsqu'il est exécuté par le processeur (20), une opération, l'opération comprenant les étapes suivantes :

        - recevoir des données d'entrée relatives à un premier objet,
        - entrer les données d'entrée dans un modèle d'apprentissage automatique entraîné,
        - recevoir du modèle d'apprentissage automatique entraîné une première représentation du premier objet,
        - recevoir au moins une deuxième représentation d'au moins un deuxième objet,
        - calculer une valeur de similitude, la valeur de similitude indiquant la similitude entre la première représentation et l'au moins une deuxième représentation,
        - délivrer en sortie la valeur de similitude,

    où le modèle d'apprentissage automatique entraîné a été entraîné dans un processus d'entraînement, le processus d'entraînement comprenant les étapes suivantes :

        - fournir un modèle d'apprentissage automatique, le modèle d'apprentissage automatique comprenant :

            • une première couche d'entrée ($I^1$),
            • une deuxième couche d'entrée ($I^2$),
            • une première couche de sortie ($O^1$),
            • une deuxième couche de sortie ($O^2$), et
            • une troisième couche de sortie ($O^3$),

        - recevoir des données d'entraînement pour entraîner le modèle d'apprentissage automatique, où la fourniture de données d'entraînement comprend :

• recevoir, pour chaque objet (i) d'une multitude d'objets (a, b, c), des données d'entrée d'au moins deux modalités différentes, des premières données d'entrée ( $\overset{\cdot}{X}_i^1$ ) d'une première modalité et des deuxièmes données d'entrée ( $X_i^2$ ) d'une deuxième modalité,

• générer des premières données d'entrée augmentées ( $\widehat{X}_i^1, \overline{X}_i^1$ ) à partir des premières données ( $\overset{\cdot}{X}_i^1$ ) d'entrée et des deuxièmes données d'entrée augmentées ( $\widehat{X}_i^2, \overline{X}_i^2$ ) à partir des deuxièmes données d'entrée ( $\overset{\cdot}{X}_i^2$ ),

• générer des premières données d'entrée masquées ( $\widetilde{X}_i^1, \overline{\overline{X}}_i^1$ ) à partir des premières données d'entrée augmentées ( $\widehat{X}_i^1, \overline{X}_i^1$ ) et des deuxièmes données d'entrée masquées ( $\widetilde{X}_i^2, \overline{\overline{X}}_i^2$ ) à partir des deuxièmes données d'entrée augmentées ( $\widehat{X}_i^2, \overline{X}_i^2$ ),

- former le modèle d'apprentissage automatique pour effectuer une tâche combinée de reconstruction et de discrimination, l'entraînement comprenant les étapes suivantes :

• entrer les premières données d'entrée masquées ( $\widetilde{X}_i^1, \overline{\overline{X}}_i^1$ ) dans la première couche d'entrée ( $I^1$ ),
• entrer les deuxièmes données d'entrée masquées ( $\widetilde{X}_i^2, \overline{\overline{X}}_i^2$ ) dans la deuxième couche d'entrée ( $I^2$ ),
• reconstruire les premières données d'entrée augmentées ( $\widehat{X}_i^1, \overline{X}_i^1$ ) à partir des premières données d'entrée masquées ( $\widetilde{X}_i^1, \overline{\overline{X}}_i^1$ ) par l'intermédiaire de la première couche de sortie ( $O^1$ ),
• reconstruire les deuxièmes données d'entrée augmentées ( $\widehat{X}_i^2, \overline{X}_i^2$ ) à partir des deuxièmes ( $\widetilde{X}_i^2$ ) données d'entrée masquées par l'intermédiaire de la deuxième couche de sortie ( $O^2$ ),
• générer une représentation conjointe ( $Z_i$ ) des premières données d'entrée masquées ( $\widetilde{X}_i^1, \overline{\overline{X}}_i^1$ ) et des deuxièmes données d'entrée masquées ( $\widetilde{X}_i^2, \overline{\overline{X}}_i^2$ ) par l'intermédiaire de la troisième couche de sortie ( $O^3$ ), et
• discriminer les représentations conjointes qui ont été générées à partir de données d'entrée du même objet à partir de représentations contrastives conjointes qui ont été générées à partir de données d'entrée de différents objets

- où le premier objet, l'au moins un deuxième objet et chaque objet de la multitude d'objets est un être humain, de préférence un patient,
- où le premier objet est différent de l'au moins un deuxième objet, ou

le premier objet est identique à l'au moins un deuxième objet, et la première représentation est une représentation du premier objet à un premier moment et
l'au moins une deuxième représentation représente le premier objet au moins un deuxième moment,

- où les premières données d'entrée ( $\overset{\cdot}{X}_i^1$ ) de la première modalité comprennent une ou plusieurs images et les deuxièmes données d'entrée ( $X_i^2$ ) de la deuxième modalité comprennent ou sont dérivées de fichiers texte et/ou de fichiers audio.

**9.** Support informatique non transitoire sur lequel sont stockées des instructions logicielles qui, lorsqu'elles sont exécutées par un processeur (20) d'un système informatique (1), amènent le système informatique (20) à exécuter les étapes suivantes :

- recevoir des données d'entrée relatives à un premier objet,
- entrer les données d'entrée dans un modèle d'apprentissage automatique entraîné,
- recevoir du modèle d'apprentissage automatique entraîné une première représentation du premier objet,
- calculer une valeur de similitude, la valeur de similitude indiquant la similitude entre la première représentation et au moins une deuxième représentation d'au moins un deuxième objet,
- délivrer en sortie la valeur de similitude,

où le modèle d'apprentissage automatique entraîné a été entraîné dans un processus d'entraînement, le processus d'entraînement comprenant les étapes suivantes :

- fournir un modèle d'apprentissage automatique, le modèle d'apprentissage automatique comprenant :

  • une première couche d'entrée ($I^1$),
  • une deuxième couche d'entrée ($I^2$),
  • une première couche de sortie ($O^1$),
  • une deuxième couche de sortie ($O^2$), et
  • une troisième couche de sortie ($O^3$),

- fournir des données d'entraînement pour entraîner le modèle d'apprentissage automatique, où la fourniture de données d'entraînement comprend les étapes suivantes :

  • recevoir, pour chaque objet (i) d'une multitude d'objets (a, b, c), des données d'entrée d'au moins deux modalités différentes, des premières données d'entrée ($X_i^1$) d'une première modalité et des deuxièmes données d'entrée ($X_i^2$) d'une deuxième modalité,
  • générer des premières données d'entrée augmentées ($\widehat{X}_i^1, \overline{X}_i^1$) à partir des premières données ($X_i^1$) d'entrée et des deuxièmes données d'entrée augmentées ($\widehat{X}_i^2, \overline{X}_i^2$) à partir des deuxièmes données d'entrée ($X_i^2$),
  • générer des premières données d'entrée masquées ($\widetilde{X}_i^1, \overline{\overline{X}}_i^1$) à partir des premières données d'entrée augmentées ($\widehat{X}_i^1, \overline{X}_i^1$) et des deuxièmes données d'entrée masquées ($\widetilde{X}_i^2, \overline{\overline{X}}_i^2$) à partir des deuxièmes données d'entrée augmentées ($\widehat{X}_i^2, \overline{X}_i^2$),

- entraîner le modèle d'apprentissage automatique pour effectuer une tâche combinée de reconstruction et de discrimination, l'entraînement comprenant les étapes suivantes :

  • entrer les premières données d'entrée

masquées ($\widetilde{X}_i^1, \overline{\overline{X}}_i^1$) dans la première couche d'entrée ($I^1$),
  • entrer les deuxièmes données d'entrée masquées ($\widetilde{X}_i^2, \overline{\overline{X}}_i^2$) dans la deuxième couche d'entrée ($I^2$),
  • reconstruire les premières données d'entrée augmentées ($\widehat{X}_i^1, \overline{X}_i^1$) à partir des premières données d'entrée masquées ($\widetilde{X}_i^1, \overline{\overline{X}}_i^1$) par l'intermédiaire de la première couche de sortie ($O^1$),
  • reconstruire les deuxièmes données d'entrée augmentées ($\widehat{X}_i^2, \overline{X}_i^2$) à partir des deuxièmes données d'entrée masquées ($\widetilde{X}_i^2, \overline{\overline{X}}_i^2$) par l'intermédiaire de la deuxième couche de sortie ($O^2$),
  • générer une représentation conjointe ($Z_i$) des premières données d'entrée masquées ($\widetilde{X}_i^1, \overline{\overline{X}}_i^1$) et des deuxièmes données d'entrée masquées ($\widetilde{X}_i^2, \overline{\overline{X}}_i^2$) par l'intermédiaire de la troisième couche de sortie ($O^3$), et
  • discriminer les représentations conjointes qui ont été générées à partir de données d'entrée du même objet à partir de représentations contrastives conjointes qui ont été générées à partir de données d'entrée de différents objets,

- où le premier objet, l'au moins un deuxième objet et chaque objet de la multitude d'objets est un être humain, de préférence un patient,
- où le premier objet est différent de l'au moins un deuxième objet, ou

le premier objet est identique à l'au moins un deuxième objet, et la première représentation est une représentation du premier objet à un premier moment et l'au moins une deuxième représentation représente le premier objet au moins un deuxième moment,

- où les premières données d'entrée ($X_i^1$) de la première modalité comprennent une ou plusieurs images et les deuxièmes données d'entrée ($X_i^2$) de la deuxième modalité comprennent ou sont dérivées de fichiers texte et/ou de fichiers audio.

Fig. 1

Fig. 2

Fig. 3

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018140225 A
- WO 2020132674 A
- WO 2019217152 A

**Non-patent literature cited in the description**

- **F. FENG et al.** Correspondence Autoencoders for Cross-Modal Retrieval. *ACM Trans. Multimedia Comput. Commun. Appl.*, 2015, vol. 12 (1s)
- **J. DIPPEL et al.** Towards Fine-grained Visual Representations by Combining Contrastive Learning with Image Reconstruction and Attention-weighted Pooling. *arXiv:2104.04323v1 [cs.CV*
- **N. FAREED**. Intelligent High Resolution Satellite/Aerial Imagery. *Advances in Remote Sensing*, 2014, vol. 03, 1-9
- **C. YANG et al.** Using High-Resolution Airborne and Satellite Imagery to Assess Crop Growth and Yield Variability for Precision Agriculture. *Proceedings of the IEEE*, March 2013, vol. 101 (3), 582-592
- **P. BASNYAT et al.** Agriculture field characterization using aerial photograph and satellite imagery. *IEEE Geoscience and Remote Sensing Letters*, January 2004, vol. 1 (1), 7-10
- Machine Learning Paradigms: Advances in Deep Learning-based Technological Applications. **G.A. TSIHRINTZIS** ; **L.C. JAIN**. Learning and Analytics in Intelligent Systems. Springer Nature, 2020, vol. 18
- **K. GRZEGORCZYK**. Vector representations of text data in deep learning. *arXiv:1901.01695v1 [cs.CL*, 2018
- **D. ITZKOVICH et al.** Using Augmentation to Improve the Robustness to Rotation of Deep Learning Segmentation in Robotic-Assisted Surgical Data. *2019 International Conference on Robotics and Automation (ICRA), Montreal, QC, Canada*, 2019, 5068-5075
- **E. CASTRO et al.** Elastic deformations for data augmentation in breast cancer mass detection. *2018 IEEE EMBS International Conference on Biomedical Health Informatics (BHI)*, 2018, 230-234
- **Y.-J. CHA et al.** Autonomous Structural Visual Inspection Using Region-Based Deep Learning for Detecting Multiple Damage Types. *Computer-Aided Civil and Infrastructure Engineering*, vol. 00, 1-17

- **S. WANG et al.** Multiple Sclerosis Identification by 14-Layer Convolutional Neural Network With Batch Normalization, Dropout, and Stochastic Pooling. *Frontiers in Neuroscience*, vol. 12, 818
- **Z. WANG et al.** CNN Training with Twenty Samples for Crack Detection via Data Augmentation. *Sensors*, 2020, vol. 20, 4849
- **B. HU et al.** A Preliminary Study on Data Augmentation of Deep Learning for Image Classification. *Computer Vision and Pattern Recognition; Machine Learning (cs.LG); Image and Video Processing (eess.IV), arXiv:1906.11887*
- **R. TAKAHASHI et al.** Data Augmentation using Random Image Cropping and Patching for Deep CNNs. *Journal of Latex Class Files*, 2015, vol. 14 (8)
- **CUTOUT: T. DEVRIES** ; **G. W. TAYLOR**. Improved Regularization of Convolutional Neural Networks with Cutout. *arXiv:1708.04552*, 2017
- **Z. ZHONG et al.** Random Erasing Data Augmentation. *arXiv:1708.04896*, 2017
- **S.M. MEYSTRE et al.** Extracting information from textual documents in the electronic health record: a review of recent research. *Yearb Med Inform*, 2008, 128-44
- **O. SUN**. MICE-DA: A MICE method with Data Augmentation for missing data imputation. *IEEE ICHI 2019 DACMI Challenge, 2019 IEEE International Conference on Healthcare Informatics (ICHI)*, 2019, 1-3
- Improving Short Text Classification Through Global Augmentation Methods. **V. MARIVATE** ; **T. SEFARA et al.** Machine Learning and Knowledge Extraction. CD-MAKE 2020. Lecture Notes in Computer Science. Springer, 2020, vol. 12279
- **J. WEI** ; **K. ZOU**. EDA: Easy Data Augmentation Techniques for Boosting Performance on Text Classification Tasks. *arXiv:1901.11196 [cs.CL*
- **M. ABULAISH** ; **A. K. SAH**. A Text Data Augmentation Approach for Improving the Performance of CNN. *2019, 11th International Conference on Communication Systems & Networks (COMSNETS), Bengaluru, India*, 2019, 625-630

- **A. OLLAGNIER** ; **H. WILLIAMS**. *Text Augmentation Techniques for Clinical Case Classification*, 2020, https://www.researchgate.net/publication/343949092
- **T. CHEN et al.** A simple framework for contrastive learning of visual representations. *arXiv preprint arXiv:2002.05709*, 2020
- **P. KHOSLA et al.** Supervised Contrastive Learning, Computer Vision and Pattern Recognition. *arXiv:2004.11362 [cs.LG*
- **J. DIPPEL** ; **S. VOGLER** ; **J, HÖHNE**. Towards Fine-grained Visual Representations by Combining Contrastive Learning with Image Reconstruction and Attention-weighted Pooling. *arXiv:2104.04323v1 [cs.CV*
- **A. RADFORD et al.** Learning transferable visual models from natural language supervision. *arXiv:2103.00020 [cs.CV*, 2021, https://cdn.openai.com/papers/Learning_Transferable_Visual_Models_From_Natural_Language_Supe rvision.pdf
- U-net: Convolutional networks for biomedical image segmentation. **O. RONNEBERGER et al.** International Conference on Medical image computing and computer-assisted intervention. Springer, 2015, 234-241
- **G. HUANG et al.** Densely connected convolutional networks. *IEEE Conference on Computer Vision and Pattern Recognition*, 2017, 2261-2269